# EUROPEAN PATENT APPLICATION

(11) **EP 2 672 379 A1**
(43) Date of publication of application: **11.12.2013**
(21) Application number: 12171047.9
(22) Date of filing: 06.06.2012
(51) Int. Cl.: G06F 9/44

(54) **Method and device for data entry**

(71) Applicant: BlackBerry Limited, Waterloo, ON N2K 0A7 (CA)
(72) Inventor: Seaman, Conrad Delbert, Waterloo, Ontario N2L 3W8 (CA); Cheung, William Alexander, Waterloo, Ontario N2L 3W8 (CA); Wormald, Christopher, Waterloo, Ontario N2L 3W8 (CA); Klassen, Gerhard Dietrich, Waterloo, Ontario N2L 3W8 (CA)
(74) Representative: Greenaway, Martin William

(57) **Abstract**

Methods and devices for data entry are disclosed. An example method includes detecting contextual information for a mobile device, automatically selecting a data entry form template from a plurality of data entry form templates based on the contextual information, generating a data entry form instance of the selected data entry form template, entering data received via an input device of the mobile device into the instance of the data entry form, storing the instance of the data entry form including the data, and presenting a representation of the instance of the data entry form in an interface with a representation of at least one additional instance of a data entry form generated based on the data entry form template.

## Description

### FIELD OF THE DISCLOSURE

This disclosure relates generally to mobile devices and, more particularly, to methods and devices for data entry.

### BACKGROUND

Tablet computing devices and other mobile handhelds are now common. These devices often include user interfaces enabling control via simple and intuitive user actions, such as touches and gestures.

### BRIEF DESCRIPTION OF THE DRAWINGS

FIG. 1 is a block diagram of an example mobile device in accordance with the disclosure.

FIG. 2 illustrates a block diagram of an example device for data entry.

FIG. 3 illustrates an example system including multiple devices for data entry, an information server, and a computer.

FIG. 4 is a table representative of example rules that may be used by a form instantiator to select a data entry template based on contextual information.

FIG. 5 is a table representative of example data entry templates.

FIG. 6 illustrates an example user interface upon launching a data entry application.

FIG. 7 illustrates the example user interface of FIG. 6 displaying previously-generated notes.

FIG. 8 illustrates the example user interface of FIG. 6 displaying notes belonging to the data entry subject Project A of FIG. 7 at a first time resolution.

FIG. 9 illustrates the example user interface of FIG. 6 displaying notes belonging to the data entry subject Project A of FIG. 8 at a second time resolution.

FIG. 10 is a block diagram illustrating an example executable data entry form for exporting notes from the data entry application of FIG. 6.

FIG. 11 illustrates the example user interface of FIG. 6 in response to a selection of the image note button.

FIG. 12 illustrates the example user interface of FIG. 6 presenting an image/video note interface in response to selection of the image note button.

FIG. 13 illustrates the example user interface of FIG. 6 presenting an annotation interface including a virtual keyboard for annotating an image/video note.

FIG. 14 illustrates the example user interface of FIG. 6 presenting a data entry form representation of a video note on a timeline.

FIG. 15 illustrates the example user interface of FIG. 6 in response to a selection of the audio note button.

FIG. 16 illustrates the example user interface of FIG. 6 presenting an audio note interface in response to selection of the audio note button.

FIG. 17 illustrates the example user interface of FIG. 6 in response to a selection of the text note button.

FIG. 18 illustrates the example user interface of FIG. 6 presenting a text note interface for entering data into a text note in response to selection of the text note button.

FIG. 19 illustrates the user interface of FIG. 6 displaying an example note generated based on a note template in the example application.

FIG. 20 illustrates a user interface displaying an example note generated based on a note template.

FIG. 21 is a flowchart representative of an example method to record data.

FIG. 22 is a flowchart representative of an example method to record data in a data entry form.

FIG. 23 is a flowchart representative of an example method to implement an audio note interface.

FIG. 24 is a flowchart representative of an example method to implement an image note interface.

FIG. 25 is a flowchart representative of an example method to implement a text note interface.

FIG. 26 is a flowchart representative of an example method to export a selected portion of a project.

FIG. 27 is a block diagram of an example processor platform capable of executing the instructions of FIGS. 21-26 to implement the software device of FIG. 2.

### DETAILED DESCRIPTION

Example methods and apparatus disclosed herein provide a data entry (e.g., note-taking) application or device to replace the use of a pen and paper (e.g., the traditional moleskine notebook) with a mobile computing device. Example methods and apparatus disclosed herein make the experience and value of data entry (e.g., note-taking) on a mobile computing device more beneficial to the end user than conventional pen and paper notes. Computing devices, such as mobile devices and tablet computers, benefit from the ability to rapidly organize and present entered data to the user in a logical format. Known methods and devices to perform data entry on a computing device limit the ability of the user to capture useful information in a timely manner.

Some known devices and application, such as stylus input devices (e.g., the Wacom® Bamboo® stylus), accessory products for use with tablets (e.g., the Wacom® Inkling®) and note taking applications (e.g., Evernote®, Note Taker, Notes Plus), frequently focus on one aspect of note taking (e.g., handwriting recognition, input) but ultimately fail to provide an experience capable of replacing the utility or value of pen and paper. In contrast, methods and devices disclosed herein provide a data entry experience capable of exceeding the value of pen and paper by enabling multiple methods of data or content entry, exporting of data entry forms (e.g., notes) in a form or format usable by other types of devices, and organization of the data and/or content.

Some example methods and apparatus disclosed herein enable annotation of audio, video, and/or image-based data or content. This feature enhances the ability of a user to discern data entered by the user (e.g., the content of the data, the context of the data). For example, if a user's written notes are not legible or are very terse, the user could return to an audio recording to improve or complete the notes at a later date because the context of the discussion may be preserved in the audio. Preservation of context is achieved while balancing device storage limitations (e.g., saving only selected audio clips instead of a full duration of a meeting or session) and preserving the privacy of individuals (e.g., by permanently keeping only the most relevant portions of audio instead of a longer session or duration). In some examples, the audio content is passed through a speech-to-text converter to enable note taking without manually entering text, fact checking prior notes against an automatically-generated transcript, or manually associating the audio with a contextually-relevant portion of text-based content.

Disclosed example devices include a logic circuit and a memory. The memory is to store instructions which, when executed by the logic circuit, cause the logic circuit to detect contextual information for a mobile device, automatically select a data entry form template from a plurality of data entry form templates based on the contextual information, generate a data entry form instance of the selected data entry form template, enter data received via an input device of the mobile device into the instance of the data entry form, store the instance of the data entry form including the data, and present a representation of the instance of the data entry form in an interface with a representation of at least one additional instance of a data entry form generated based on the data entry form template.

In some example devices, the input device includes at least one of a microphone, an image sensor, a touch sensitive overlay, a keypad, or an auxiliary input. In some such examples, the data entry form manager is to automatically store first data comprising at least one of audio received via the microphone or video received via the image sensor in response to receiving second data received via the touch sensitive overlay.

Some example devices further include a form reader to interpret a received data entry form for display via the data entry form manager. In some such example devices, the received data entry form includes markup code, scripting code, and content.

Some example devices include a form exporter to export a data entry form in a format viewable by multiple types of devices. In some examples, the form instantiator is to enter second data into the data entry form based on the contextual information. In some example devices, the data entry form includes at least one of a text note, an image note, a video note, or an audio note. In some examples, the data entry form manager is to present a plurality of notes in a timeline view.

Some example devices disclosed herein include a logic circuit and a memory, storing instructions which, when executed by the logic circuit, cause the logic circuit to: detect contextual information for a mobile device, generate an instance of a data entry form based on the contextual information, enter data received via an input device of the mobile device into the data entry form, and store the data entry form including the data.

In some example devices, detecting the contextual information is in response to opening a note-taking application on the mobile device. In some examples, generating an instance of the data entry form includes selecting from a plurality of data entry form templates. In some such examples, selecting from the plurality of data entry templates includes selecting one of the plurality of data entry form templates based on a similarity of the contextual information to second contextual information associated with the selected one of the plurality of data entry form templates.

In some example devices, the data received via the input device includes at least one of a plurality of inputs including audio received via an audio input device, video received via an image sensor, an image received via the image sensor, text received via a software keyboard, text received via a physical keyboard and text received via the audio input device and processed to generate the text from the audio. Some such example devices further enter first data received via a first one of the plurality of inputs in response to entering second data received via a second one of the plurality of inputs. Some example devices further retrieve the first data from a buffer, the first data comprising at least one of audio data or video data and representing a time period occurring immediately prior to a time the second data is entered or occurring immediately prior to a time the second data is received.

Some example devices further associate the data received via the input device with a location on a first timeline representative of a time the data is entered. Some such example devices further display a collective timeline including the first timeline and a second timeline representative of a second data entry form. Some such example devices further display the collective timeline at a first time resolution representative of the at least a portion of the first timeline and at least a portion of the second timeline, and display the collective timeline at a second time resolution representative of the first timeline in response to a user input. Some example devices play back audio or video stored in the data entry form and associated with a selected location on the first timeline.

Example methods disclosed herein include detecting contextual information for a mobile device, automatically selecting a data entry form template from a plurality of data entry form templates based on the contextual information, generating a data entry form instance of the selected data entry form template, entering data received via an input device of the mobile device into the instance of the data entry form, storing the instance of the data entry form including the data, and presenting a representation of the instance of the data entry form in an interface with a representation of at least one additional instance of a data entry form generated based on the data entry form template.

In some example methods, detecting the contextual information is in response to opening a note-taking application on the mobile device. In some examples, automatically generating an instance of the data entry form includes selecting from a plurality of data entry form templates. In some such examples, selecting from the plurality of data entry templates includes selecting one of the plurality of data entry form templates based on a similarity of the contextual information to second contextual information associated with the selected one of the plurality of data entry form templates.

In some example methods, the data received via the input device includes at least one of a plurality of inputs including audio received via an audio input device, video received via an image sensor, an image received via the image sensor, text received via a software keyboard, text received via a physical keyboard and text received via the audio input device and processed to generate the text from the audio. Some such example methods further include entering first data received via a first one of the plurality of inputs in response to entering second data received via a second one of the plurality of inputs. Some example methods further include retrieving the first data from a buffer, the first data comprising at least one of audio data or video data and representing a time period occurring immediately prior to a time the second data is entered or occurring immediately prior to a time the second data is received.

Some example methods further include associating the data received via the input device with a location on a first timeline representative of a time the data is entered. Some such example methods further include displaying a collective timeline including the first timeline and a second timeline representative of a second data entry form. Some such examples further include displaying the collective timeline at a first time resolution representative of the at least a portion of the first timeline and at least a portion of the second timeline, and displaying the collective timeline at a second time resolution representative of the first timeline in response to a user input. Some example methods further include automatically playing back audio or video stored in the data entry form and associated with a selected location on the first timeline.

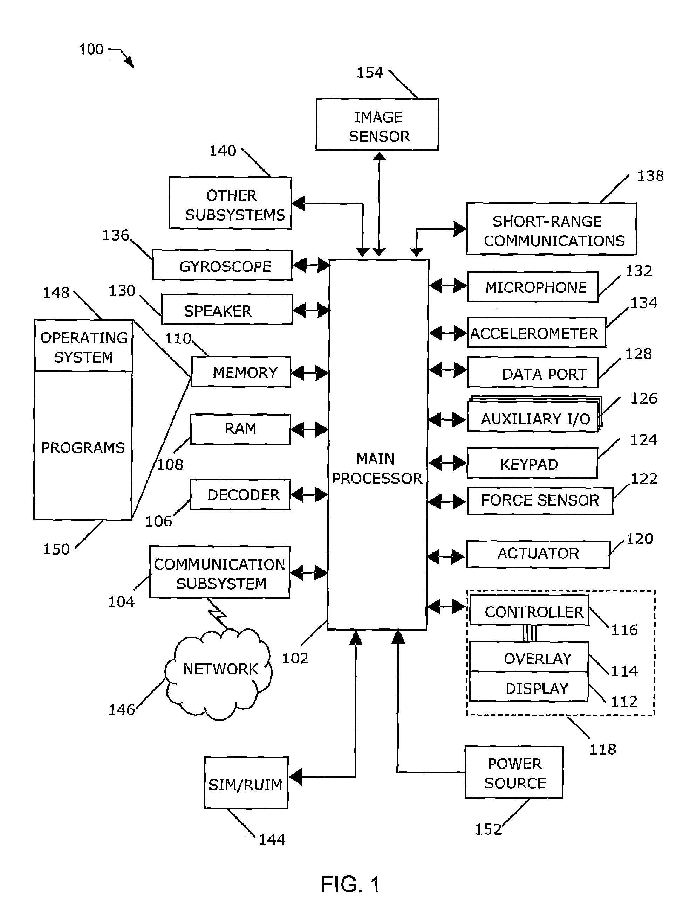

A block diagram of an example mobile device 100 is shown in FIG. 1. The mobile device 100 includes multiple components, such as a processor 102 that controls the overall operation of the mobile device 100. Communication functions, including data and voice communications, are performed through a communication subsystem 104. The example communication subsystem 104 includes any number and/or type(s) of network interface circuit(s). Data received by the mobile device 100 is decompressed and decrypted by a decoder 106. The communication subsystem 104 receives messages from and sends messages to a wireless network 146. The wireless network 146 may be any type of wireless network, including, but not limited to, data wireless networks, voice wireless networks, and networks that support both voice and data communications. A power source 152, such as one or more rechargeable batteries or a port to an external power supply, powers the mobile device 100.

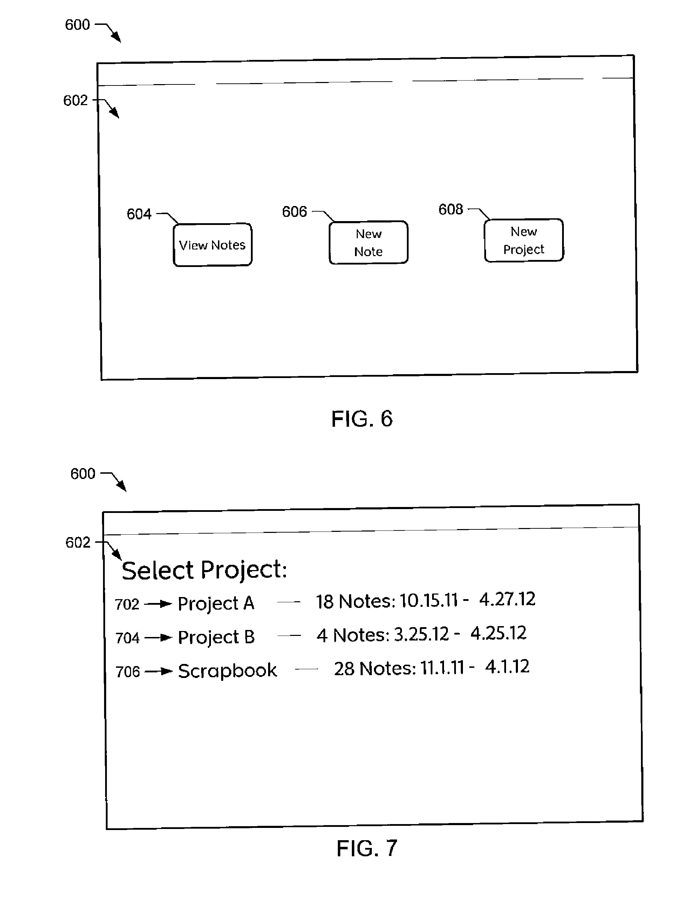

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuator apparatus 120, one or more force sensors 122, a keypad 124 (which may be a physical or a virtual keyboard), an auxiliary input/output (I/O) subsystem 126, a data port 128, a speaker 130, a microphone 132, an accelerometer 134, a gyroscope 136, short-range communications 138, and other device subsystems 140. User-interaction with a graphical user interface (such as the interface of FIGS. 6-9 and 11-20 described below) is performed through the touch-sensitive display 118. The processor 102 interacts with the touch-sensitive overlay 114 via the electronic controller 116. Information, such as text, characters, symbols, images, icons, and other items that may be displayed or rendered on a mobile device, is displayed on the touch-sensitive display 118 via the processor 102. In some examples, the display 112 may include a primary display and a secondary display. The display of information between the primary and the secondary displays are coordinated to provide information to a user when the electronic device is in an open position or a closed position.

To identify a subscriber for network access, the mobile device 100 uses a Subscriber Identity Module or a Removable User Identity Module (SIM/RUIM) card 144 for communication with a network, such as the wireless network 146. Alternatively, user identification information may be programmed into memory 110.

The mobile device 100 includes an operating system 148 and/or firmware and software programs or components 150 that are executed by the processor 102 to implement various applications and are typically stored in a persistent, updatable store such as the memory 110. Additional applications or programs may be loaded onto the mobile device 100 through the wireless network 146, the auxiliary I/O subsystem 126, the data port 128, the short-range communications subsystem 138, or any other suitable subsystem 140.

A received signal such as a text message, an e-mail message, or web page download is processed by the communication subsystem 104 and input to the processor 102. The processor 102 processes the received signal for output to the display 112 and/or to the auxiliary I/O subsystem 126. A subscriber may generate data items, for example data entry forms (e.g., notes), which may be transmitted over the wireless network 146 through the communication subsystem 104. For voice communications, the overall operation of the mobile device 100 is similar. The speaker 130 outputs audible information converted from electrical signals, and the microphone 132 converts audible information into electrical signals for processing. In some examples, the mobile device 100 has access (e.g., via the communication subsystem 104 and the wireless network 146) to a voicemail server. The mobile device 100 may initiate a voicemail access session with the voicemail server to retrieve voice messages for a user.

The example mobile device 100 of FIG. 1 further includes an image sensor 154. The example image sensor 154 of FIG. 1 may capture images and/or videos in any format for display (e.g., via the display 112) and/or storage (e.g., on the RAM 108, the memory 110, etc.).

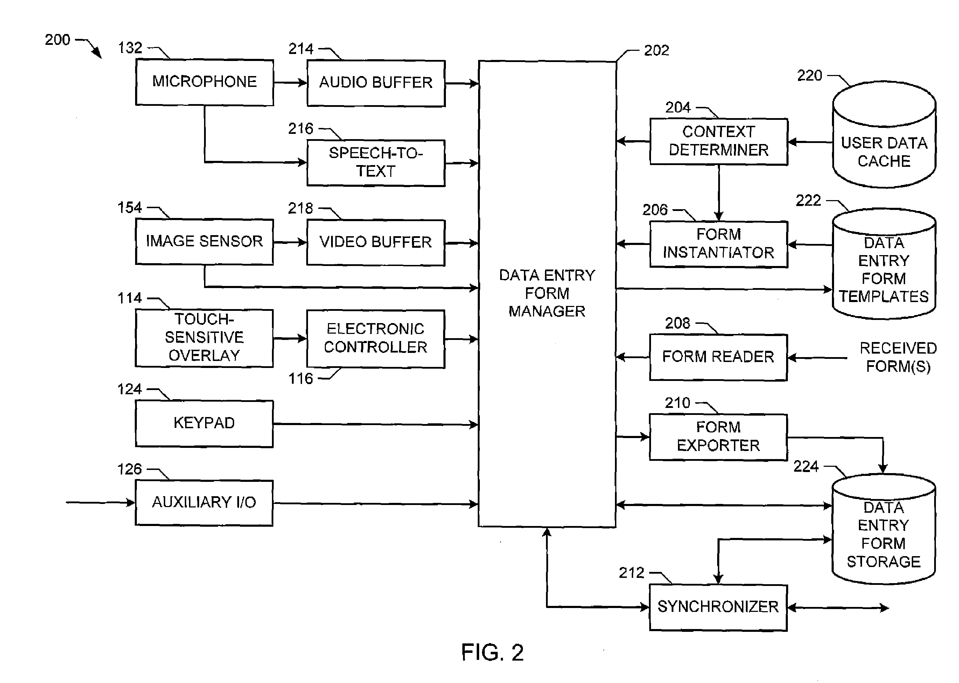

FIG. 2 illustrates a block diagram of an example device 200 for data entry. The example device 200 of FIG. 2 may be implemented by the example mobile device 100 of FIG. 1, a computer, a smartphone, a tablet computer, a personal digital assistant, or any other type of mobile or computing device, to perform data entry on, for example, a smartphone and/or a tablet computer. The example device 200 includes a data entry form manager 202, a context determiner 204, a form instantiator 206, a form reader 208, a form exporter 210, and a synchronizer 212. The example device 200 of FIG. 2 further includes one or more user input device(s) including, but not limited to, the example microphone 132, the example touch-sensitive overlay 114, the electronic controller 116, the example keypad 124, the example auxiliary I/O 126, and/or the example image sensor 154 of FIG. 1, and/or any other method to obtain user input. The example device 200 and/or any of the blocks illustrated in FIG. 2 may be implemented using software, firmware, hardware, and/or any combination thereof.

As described in more detail below, the example data entry form manager 202 of FIG. 2 enters data into one or more data entry forms. In general, a data entry form used by the data entry form manager is a data (e.g., software) construct that holds data for present and/or future organization and/or display, for merging (e.g., synchronizing) with other data entry forms, and/or for present and/or future recall via the data entry form manager and/or via other devices (e.g., having the same or different types as the device 200). The example data entry form manager 202 receives a data entry form (e.g., an instance of a data entry form) for data entry.

The data entry form manager 202 receives one or more user inputs, processes the inputs, and stores the user inputs as data or content in the data entry form. As used herein, the term "user input" includes both commands and/or data input directly by the user (e.g., by touching the touch-sensitive overlay 114, by typing on the keypad 124, etc.) and commands and/or data indirectly input by the user (e.g., ambient audio received via the microphone 132, images and/or video received via the image sensor 154 that may have been positioned to capture a particular scene, etc.).

The example data entry form manager 202 may receive audio-based inputs from the microphone 132 via an audio buffer 214. The example audio buffer 214 of FIG. 2 stores audio captured via the microphone 132. In some examples, the audio buffer 214 only maintains a certain length of the most recent audio (e.g., the last 30 seconds, the last 60 seconds). In some other examples, the audio buffer 214 maintains an entire audio recording, starting at a particular time (e.g., the opening of a data entry application, an audio record command from the user). The data entry form manager 202 may access the most recent length of audio from the audio buffer 214 for entry into a data entry form (e.g., a note). In some examples, the data entry form manager 202 receives the audio directly from the microphone 132.

Additionally or alternatively, the example data entry form manager 202 may receive text data representative of the audio data from the microphone 132 via a speech-to-text converter 216. The example speech-to-text converter 216 generates text data based on the audio received from the microphone 132. Similar to the audio buffer 214, the example speech-to-text converter 216 may store text representative of a most recent length of audio (e.g., the last 30 seconds, the last 60 seconds, etc.) and/or may store text representative of the entire recorded period. The example data entry form manager 202 may access the speech-to-text converter 216 to obtain text derived from received audio. In some examples, the data entry form manager 202 may only receive audio-related content via the speech-to-text converter 216 (e.g. may not store the original audio content) to preserve the privacy of the speaker.

The example data entry form manager 202 also receives image and/or video input from the image sensor 154. The example image sensor 154 may capture still images (e.g., photos) and/or videos (e.g., a series of images). In the example of FIG. 2, the data entry form manager 202 receives video via a video buffer 218. In some examples, the video buffer 218 only maintains a certain length of the most recent video (e.g., the last 30 seconds, the last 60 seconds). In some other examples, the video buffer 218 maintains an entire video recording, starting at a particular time (e.g., the opening of a data entry application, a video record command from the user). The data entry form manager 202 may access the most recent length of video from the video buffer 214 for entry into a data entry form (e.g., a note). In some examples, the data entry form manager 202 stores audio (e.g., from the audio buffer 214) and video (e.g., from the video buffer 218) substantially simultaneously and/or co-associated to form an audiovisual clip for entry into the data entry form.

The example data entry form manager 202 of FIG. 2 may also receive user input via the touch sensitive overlay 114 and the electronic controller 116. Input via the touch-sensitive overlay 114 will also be referred to herein as "user touches" and/or "user taps." In general, user touches correspond to a selection of a selectable object or item presented to the user on a display screen. Such selectable objects include buttons (e.g., to issue predetermined commands), draggable objects (e.g., to interact with an application by positioning an object relative to one or more other objects), virtual keys on a virtual keyboard (e.g., to input text), fields (e.g., to select an object, item, or area for data entry or other interaction), and/or any other type of touch-based user interface object. In some other examples, user touches may be used to enter information "freehand," which does not conform to a predetermined command but instead simulates or mimics the experience of writing and/or drawing on paper in that a visible mark is displayed where the user has touched. User touches further include "gestures," such as a swipe, which is a form of user touch that is recognized by the data entry form manager as corresponding to a particular action, command, and/or data. The example data entry form manager 202 of FIG. 2 receives direct user input via the touch-sensitive overlay 114 and the electronic controller 116, and stores the user input as data in the data entry form, performs actions based on touch-based commands, and/or modifies a user interface based on gestures or other commands.

The data entry form manager 202 of the example of FIG. 2 may further receive input from the keypad 124. For example, the user may press physical buttons on the keypad to enter alphanumeric characters and/or symbols and/or to enter commands (e.g., "Enter," "Backspace," etc.). The example data entry form manager 202 uses the received data and/or commands to enter data into the data entry form and/or to manipulate the data entry form itself.

The example data entry form manager 202 may further receive data and/or commands from the auxiliary I/O 126. In some examples, the auxiliary I/O 126 is connected to a device external to the example device 200 (e.g., a physical keyboard, a pointing device, a camera, a microphone, and/or any other type of input device). The example data entry form manager 202 may use received data and/or commands from the auxiliary I/O 126 to enter data into the data entry form and/or perform actions.

In some examples, the data entry form manager 202 includes additional data based on the user inputs. For example, the data entry form manager 202 may timestamp the user inputs, add a geotag (e.g., a geographical metadata, global positioning system (GPS) coordinates, etc.) to the user inputs, add other users who are associated with the user input (e.g., a name or identification of a person who is speaking in an audio input, a person present at a meeting or conference associated with the user input, a person to be associated with an image and/or video input, etc.).

The example context determiner 204 of FIG. 2 determines contextual information for the example device 200. For example, the context determiner 204 may access a user data cache 220. The user data cache 220 may include personal information management (PIM) information (e.g., calendar appointments, meeting attendees, meeting subjects, agendas, prior discussions, open items, open issues, contact information, instant messages, phone calls, message or email contents, keywords, bullet lists, etc.), present geographic location, time and/or date information, and/or any other information derivable from user information, device information, and/or preferences. For example, the date, time, and location of the device 200 could be used to determine a company being visited, an event being attended, and/or associating a new data entry form (e.g., a note) with a data entry subject, topic, or project.

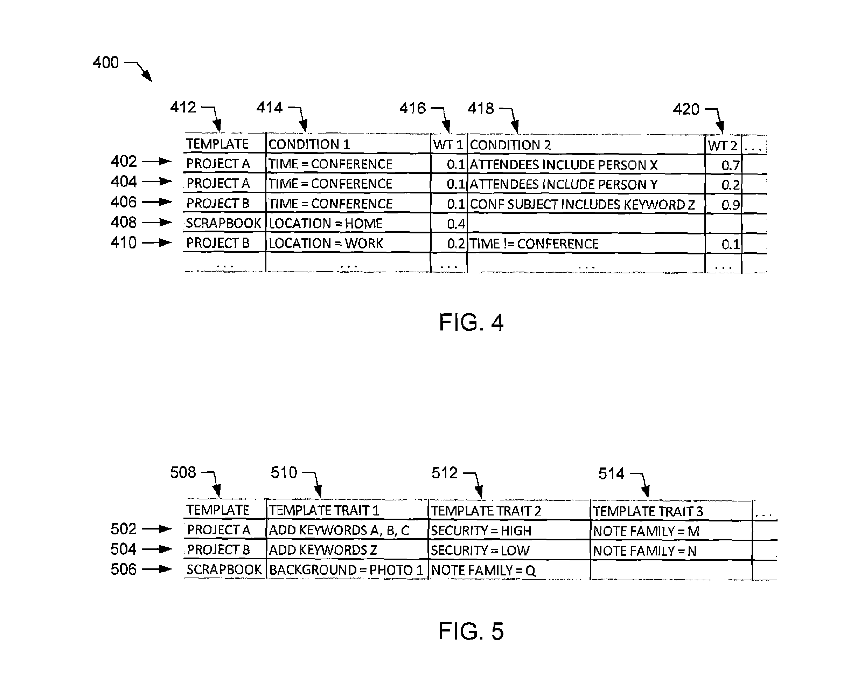

The example form instantiator 206 of FIG. 2 automatically generates an instance of a data entry form based on the contextual information (e.g., from the context determiner 204). For example, the form instantiator 206 may select a data entry form from a plurality of data entry form templates in a data entry form template cache 222. The example data entry form template cache 222 stores data entry form templates, which are instantiated by the form instantiator 206. Example data entry templates are described below with reference to FIG. 5. The example data entry form templates may further include selection rules, which are used by the form instantiator 206 to select a data entry form template using contextual information (e.g., the contextual information received from the context determiner 204). Example rules are described below with reference to FIG. 4. The form instantiator 206 selects or creates a data entry form based on the contextual information and provides the form to the data entry form manager 202. In some examples, the form instantiator 206 selects or creates a data entry form in response to a user selecting to create a new note.

In some examples, the data entry form manager 202 uses the contextual information to automatically enter data into a data entry form to provide context for the data entry form. For example, the data entry form manager 202 may automatically enter the time, date, location, meeting attendees, meeting subject, agenda, relevant keywords, and/or any other contextual information into the data entry form.

The example form reader 208 of FIG. 2 receives data entry form(s) (e.g., via the communication subsystem 104, via the short-range communications 138, and/or the network 146 of FIG. 1). The received data entry form(s) may be received from another device, in a communication such as an email, and/or from any other location. The example data entry form manager 202 accesses the form reader 208 to display (e.g., render) any received forms to a user for viewing and/or editing. In some examples, the data entry form manager may merge received form(s) with one or more data entry forms known to the data entry form manager 202. For example, the data entry form manager 202 stores data entry forms in a data entry form storage 224. The data entry form manager also retrieves stored data entry forms from the data entry form storage 224. In some examples, multiple notes are mutually associated as belonging to the same subject, project, or topic. On receiving a data entry form via the form reader 208, the example data entry form manager 202 may store the data entry form in the data entry form storage 224 and/or display the data entry form to the user. In some examples, the form reader 208 may parse the received form(s) to identify contextual information similar to the contextual information that may be stored in a data entry form by the data entry form manager 202. The example data entry form manager 202 may automatically associate the received data entry form with one or more other data entry forms based on the identified contextual information.

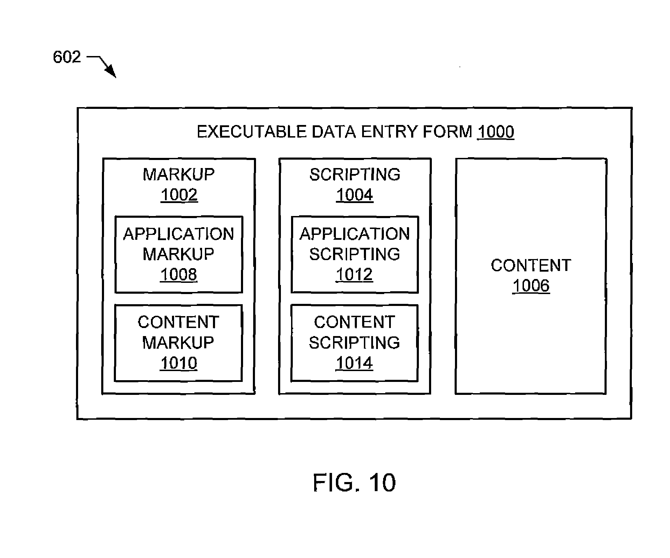

The example form exporter 210 of FIG. 2 exports (e.g., via the communication subsystem 104, via the short-range communications 138, and/or the network 146 of FIG. 1) data entry forms generated by the data entry form manager 202 and/or stored in the data entry form storage 224. For example, the form exporter 210 may export the data entry forms to other devices, to a server, to a backup device, to an email, cloud storage, and/or to any other location. In some examples, the form exporter 210 generates a replicable package that may be used by the device 200 and/or other devices to view, modify, and/or replicate the package. In some examples, the replicable package is constructed using standardized markup languages and/or standardized scripting languages to provide the same functionality that the data entry form is provided via the data entry form manager 202 (e.g., user interface functionality, contextual functionality, etc.) to devices and/or systems not having a similar or identical data entry form manager 202. An example replicable package is described below with reference to FIG. 10.

The example synchronizer 212 of FIG. 2 synchronizes (e.g., via the communication subsystem 104, via the short-range communications 138, and/or the network 146 of FIG. 1) data entry form(s) present on the device 200 (e.g., from the data entry form manager 202 and/or stored in the data entry form storage 224) with data entry form(s) and/or other applications present on other devices and/or systems.

In the example of FIG. 2, synchronizing data entry forms may include sending and/or receiving data entry forms to and/or from other users, devices, and/or systems, and/or associating received data entry forms with sent and/or stored data entry forms based on a common project, subject, and/or topic. The synchronizer 212 then stores the synchronized data entry forms in the data entry form storage based on their respective associations.

In some examples, the user may select or designate certain data entry forms to not be exportable or synchronizable (e.g., to be private). Additionally or alternatively, the user may designate particular users that may be synchronized to particular data entry forms. In some examples, the data entry form templates in the data entry form template cache 222 may specify exporting and/or synchronizing rules (e.g., permissions) for data entry forms instantiated from certain templates. In some examples, the data entry form manager 202 may specify exporting and/or synchronizing rules (e.g., permissions) based on contextual information, and store the rules in the data entry form (e.g., in the data entry form storage 224).

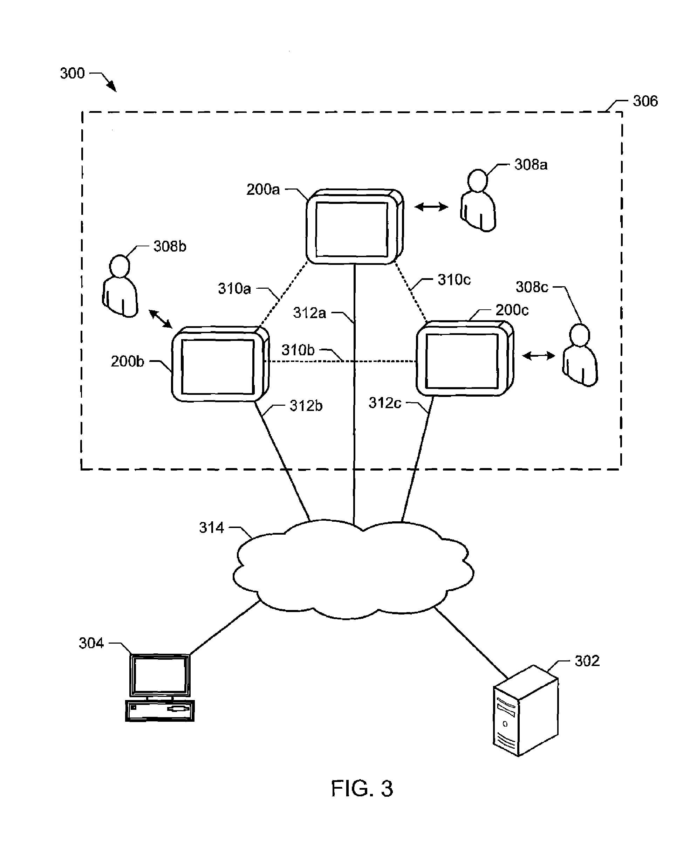

FIG. 3 illustrates an example system 300. The example system 300 of FIG. 3 includes multiple devices 200a, 200b, 200c for data entry, an information server 302, and a computer 304. The example devices 200a, 200b, 200c are described with reference to FIGS. 1 and/or 2 above. In the example system 300, the devices 200a-200c are mobile but, for the purposes of describing the example system 300 of FIG. 3, are located in the same geographical area 306 such as the same room.

In the example of FIG. 3, the devices 200a-200c are being used by respective users 308a, 308b, 308c (e.g., persons), who are present in the same meeting. Each of the users 308a-308c in the illustrated example is using a data entry application on his or her respective device 200a-200c. While the users 308a-308c are operating the data entry applications, the devices 200a-200c are creating instances of data entry forms (e.g., via form instantiators 206), entering data into the data entry forms (e.g., via input devices 114, 124, 126, 132, 154 and data entry form managers 202), and storing the data entry forms, including entered data, on the respective devices 200a-200c (e.g., in data entry form storage 224).

Although entering data into a handheld device 200a-200c may be somewhat more difficult than using pen and paper, once entered the content potentially has significantly more value to the user. The example information server 302 and/or the example computer 304 provide post-processing of data entry forms (e.g., notes) generated using the devices 200a-200c. Once a data entry form has been generated, the data entry form may contain text, pictures, audio, video, location, date, calendar, contact and/or other data or content. The data or content may be leveraged during post-processing to produce reports, revise agendas, track progress of projects, organize information, etc. For example, the information server 302 and/or the computer 304 may identify data entry subjects (e.g., projects) and identify tasks as being completed or notes being associated with the data entry subjects. The example information server 302 and/or the computer 304 may then update a project status, an agenda item, or another aspect of the data entry subject based on the note. As a result of the post-processing, the data entry forms generated via the devices 200a-200c may be revised, cross referenced, searched and/or updated, which increases the value of the notes over notes taken using pen and paper. Furthermore, the example information server 302 and/or the computer 304 may merge the data entry forms into other workflow tools (e.g., the Microsoft Office® suite, the IBM® Lotus Notes® suite, etc.).

While many of the example data entry forms (e.g., notes) stored during the meeting may include information relevant to the meeting (e.g., to a project, subject, or topic), one or more of the users may also be creating irrelevant notes (e.g., doodles). When the meeting has concluded, the example users 308a-308c select a synchronization option (or have previously set their device(s) 200a-200c to synchronize). The synchronization causes the example devices 200a-200c to synchronize data entry forms (e.g., notes) from the meeting. However, the user(s) 308a-308c of device(s) 200a-200c having irrelevant data entry forms (e.g., notes) (and/or notes that should otherwise not be synchronized) and/or the data entry form manager 202 of such devices 200a-200c may cause those data entry forms (e.g., notes) to not be synchronized. The synchronization may occur via short-range communication connections 310a, 310b, 310c (e.g., short-range communications 138 of FIG. 1) and/or via network connections 312a, 312b, 312c (e.g., communication subsystems 104 of FIG. 1) and a network 314 (e.g., the network 146 of FIG. 1).

Additionally or alternatively, any or all of the devices 200a-200c may synchronize and/or export data entry forms (e.g., notes) to the example server 302 and/or the example computer 304. The server 302 of FIG. 3 may include, for example, project management or other software that may maintain and/or organize the data entry forms (e.g., notes) received from the devices 200a-200c. Similarly, the example computer 304 may belong to (or be assigned to) the user 308a and include information management software to maintain and/or organize the data entry forms (e.g., notes) for the user 308a. In some examples, the devices 200a-200c may synchronize data entry forms (e.g., notes) prior to the meeting to provide each user 200a-200c with updated information pertaining to the project(s), subject(s), or topic(s) to be discussed.

While the example devices 200a-200c are similar or identical, other devices may additionally or alternatively be used in combination with any of the devices 200a-200c.

FIG. 4 is a table 400 representative of example rules 402, 404, 406, 408, 410. The example rules 402-410 may be stored in a data entry form template database (e.g., the data entry form template database 222 of FIG. 2) used by a form instantiator (e.g., the form instantiator 206 of FIG. 2) to select a data entry form template based on contextual information. The example table 400 (or data entry form template cache 222) includes rule definitions specifying a template 412, one or more conditions 414, 418, and one or more weights 416, 420 corresponding to the conditions 414, 418. While the example table 400 includes two conditions 414, 418 and corresponding weights, any number of conditions and/or weights may be used for any or all of the rules.

The example form instantiator 206 receives contextual information (e.g., from the context determiner 204) and determines which of the rules 402-410 in the table 400 most closely matches the contextual information. For example, the form instantiator 206 may detect one or more conditions from the contextual information (e.g., there is a conference or meeting scheduled for the current time, a meeting has attendees including a particular person, the device 200 is contemporaneously located at home or work, etc.). Based on the conditions, the example form instantiator 206 calculates scores for the rules 402-410 based on which conditions are satisfied and their corresponding weights. Thus, if the form instantiator 206 determines that the time corresponds to a meeting or conference (e.g., based on the user's calendar information), the form instantiator 206 adds a weight of 0.1 to each of the example rules 402-406 based on respective ones of their example first conditions 414. If person X is attending (e.g., based on the user's received attendance information and/or shared location information), the form instantiator 206 adds an additional weight of 0.7 to the score of the rule 402. For those conditions that are not satisfied, the example form instantiator 206 does not add the corresponding weight. In the example of FIG. 2, the form instantiator 206 determines respective scores for the rules 402-410 based on the contextual information, the conditions 414, 418, and the weights 416, 420. Based on the scores, the example form instantiator 206 picks a rule and applies the corresponding template. Other weighting systems may additionally or alternatively be used.

In some examples, the form instantiator 206 may add, remove, and/or modify variables and/or weights in the example table 400 based on the user selecting a second template after a note has been instantiated for a first template based on the contextual information and weights. Such a selection by the user may indicate that the combination of contextual information has a lower correlation to the first template than reflected in the weights. As a result, the form instantiator 206 may adjust the weights to reflect the lower correlation. Conversely, when the user begins generating notes using the instantiated data entry form, the example form instantiator 206 may adjust the weights to reflect a higher correlation between the combination of contextual information and the template.

While an example method to organize rules and conditions and/or select a template is shown in FIG. 4, other methods of organization and/or selection may additionally or alternatively be used.

FIG. 5 is a table 500 representative of example data entry templates 502-506. The example data entry templates 502-506 of FIG. 5 may be selected by the form instantiator 206 of FIG. 2 (e.g., based on contextual information) to instantiate a data entry form. The templates 502-506 include template names 508 and one or more traits 510-514. Upon selection of a template name (e.g., from the table 400 of FIG. 4), the form instantiator 206 locates the selected template in the table 500 and instantiates the data entry form based on the traits 510-514. For example, if the form instantiator 206 selects the Project A template 502, the form instantiator 206 initializes a data entry form, adds keywords A, B, and C (e.g., as metadata, tags, text, notes, etc.) to the data entry form, sets the security of the data entry form to a high setting, and associates the data entry form with a note family (e.g., note family M). The example templates 502-506 may have any type and/or number of traits to be used to instantiate the data entry form. Thus, the templates advantageously increase the speed with which a user of the data entry form can input data and organize the data for later viewing, sharing, and/or other types of use.

FIG. 6 illustrates an example user interface 600 upon launching a data entry application 602. The example user interface 600 may be a visual display presented to the user via, for example, the display 112 of FIG. 1. The example user interface 600 of FIG. 6 includes objects that may be manipulated via a touch-screen (e.g., the touch-sensitive overlay 114 and/or the controller 116 of FIGS. 1 and 2) to enable the user to interact with (e.g., enter data into) the data entry application 602.

As illustrated in FIG. 6, the example application 602 enables a user to select to view previously-generated data entry forms (e.g., a View Notes button 604), instantiate a new data entry form (e.g., a New Note button 606), and/or instantiate a new family or association of data entry forms (e.g., a New Project button 608). Operation of the example application 602 in response to the example buttons 604-608 is described in more detail below. In some examples, the data entry form manager 202 manages the application 602, including outputs from the application 602 (e.g., to the display 112) and/or responses to inputs to the application 602. For example, the data entry form manager 202 receives user touches corresponding to the buttons 604-608 (e.g., via the touch-sensitive overlay 114 of FIG. 1) and responds to the user touches via the application 602.

FIG. 7 illustrates the example user interface 600 of FIG. 6 operating to view previously-generated notes. As illustrated in FIG. 7, the user interface 600, in response to a selection of the example View Notes button 604 of FIG. 6, displays families or associations of data entry forms (e.g., projects, note families, etc.). The example user interface 600 of FIG. 7 includes data entry subjects (e.g., projects) corresponding to the example projects (e.g., Project A 702, Project B 704, Scrapbook 706) in the tables 400 and 500 of FIGS. 4 and 5.

The example user interface 600 of FIG. 6 also displays information about each of the projects 702-706, including time ranges represented by each of the projects 702-706 and a number of data entry forms (e.g., notes) that are in each project 702-706. Other data may additionally or alternatively be displayed. A user may select any of the example projects 702-706 (e.g., via the touch-sensitive overlay 114). In response to a selection, the data entry form manager 202 of FIG. 2 presents one or more of the data entry forms corresponding to the selected project 702-706 to the user as described below.

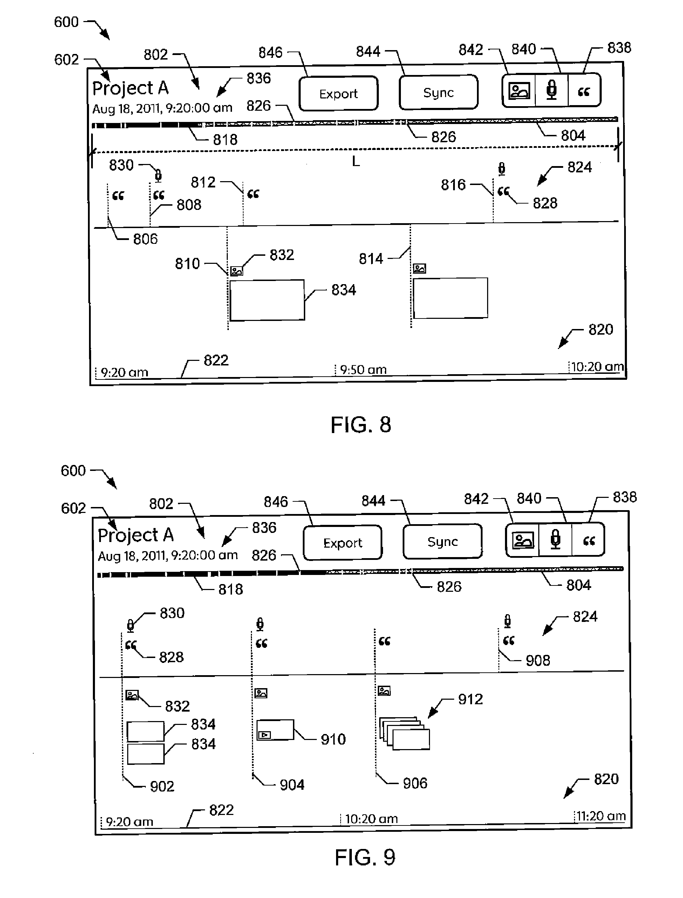

FIG. 8 illustrates the example user interface 600 of FIG. 6 operating to view notes belonging to a particular data entry subject (e.g., Project A) at a first time resolution. The example view of FIG. 8 may be referred to as a timeline view 802 of the example application 602. The timeline view 802 illustrated in FIG. 8 enables a user of the user interface 600 (e.g., of the device 200) to view multiple data entry forms (e.g., notes) in a spatial representation of time.

The example user interface 600 (e.g., the application 602 and/or the timeline view 802) of FIG. 8 illustrates a timeline 804 of Project A (e.g., Project A 702 of FIG. 7). The example timeline 804 enables a user to manipulate the timeline view 802. The timeline 804 has a length L representative of a time range of the project, where the left end of the timeline 804 represents the time at which the project 702 began and the right end of the timeline 804 represents the time at which the project 704 ended. In the case of an ongoing project, the right end of the timeline 804 may represent the present time (e.g., the time at which the user is viewing the timeline) and/or a time at which the project 702 was last modified (e.g., the time of the last added note). As time moves along, the timeline 804 represents a longer range of time, and the data entry form manager 202 moves existing data entry forms (e.g., leftward) and/or compacts the data entry forms on the timeline 804.

The example timeline view 802 of FIG. 8 displays representations of data entry forms 806-816 (e.g., notes) falling within a time window 818 of the timeline 804. The data entry forms 806-816 may be grouped and/or ungrouped based on a time resolution 820 of the time window 818. The time resolution 820 is illustrated on a timeline 822 to display the displayed range for the time window 818. For example, the time window 818 has a time resolution of 1 hour and a window range of 9:20 am to 10:20 am. A user may control the time resolution and/or the time window via the user interface 600 and/or via one or more input devices (e.g., the touch-sensitive overlay 114, voice commands via the microphone 132, etc.). For example, the user may make a multi-point pinch (or reverse-pinch) gesture via the touch-sensitive overlay 114 to zoom in (or zoom out) the time window 818. Additionally or alternatively, the example user may use a single-point or multi-point swipe gesture to translate the time window 818 (e.g., change the range of the time window while maintaining the same time resolution).

The example data entry forms 806-816 are represented in the example timeline view 802 on a time window line 824. While the data entry forms 806-816 are represented on the timeline 804 (e.g., as respective ticks 826 on the timeline in the representative time-wise locations of the data entry forms), the example time window line 824 represents the example time window 818 and provides more detailed representations of the data entry forms 806-816 than provided by the timeline 804. For example, the time window line 824 data entry forms 806-816 as located at a particular time within the window 818 by its position. The time window line 824 further illustrates the type(s) of content (e.g., data) contained within each of the data entry forms 806-816. For example, a quotation icon 828 (e.g., ") represents the presence of textual data in the data entry form 806-816, a microphone icon 830 represents the presence of audio and/or audio-based (e.g., speech-to-text) data in the data entry form 806-816, and a photo (e.g., image) icon 832 represents the presence of image-based data (e.g., photo(s) and/or video(s)) in the data entry form 806-816. The example time window line 824 of FIG. 8 also shows previews 834 (e.g., thumbnails) of image-based data (e.g., for data entry forms 810, 814).

The example timeline view 802 of FIG. 8 further includes contextual information 836 about the data entry forms being displayed. For example, the contextual information 836 includes a title of the common subject matter (e.g., project name) of the timeline 804 and a timestamp of the timeline 804. The contextual information 836 may differ based on user preferences, the selected timeline, the contextual information 836, and/or any other factor.

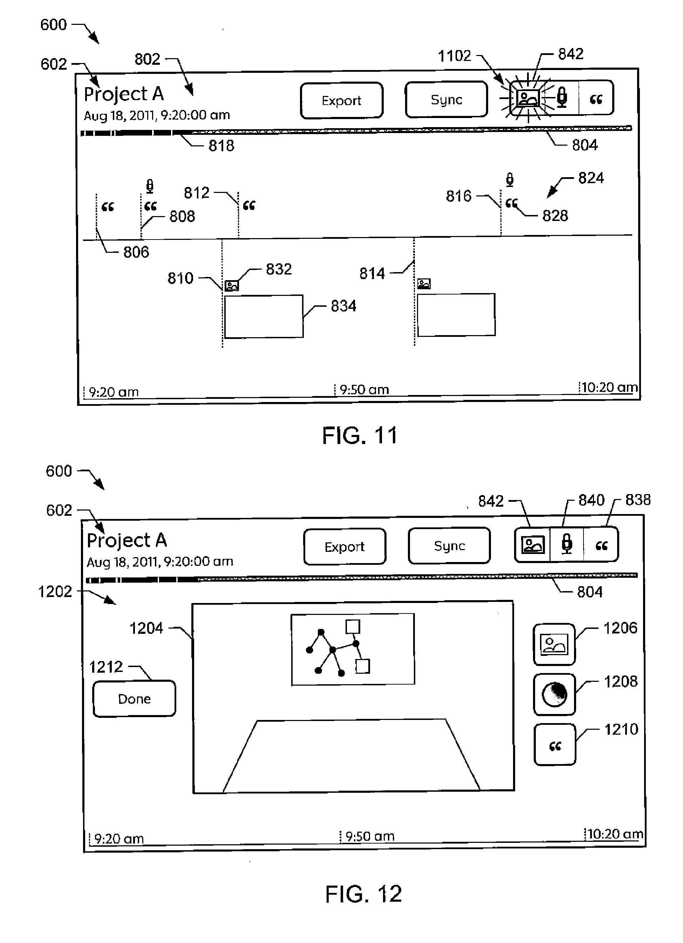

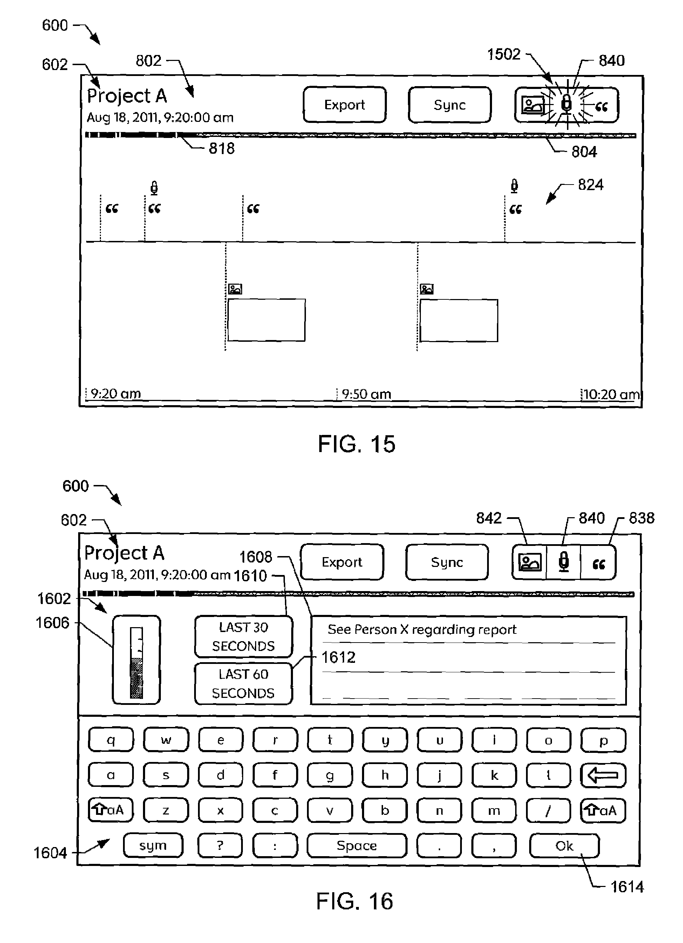

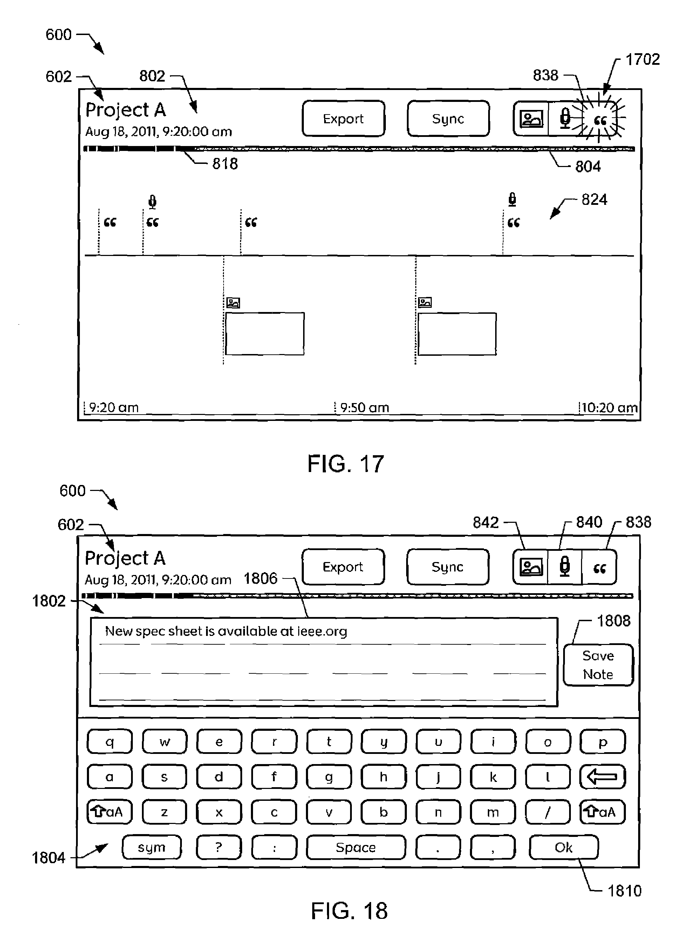

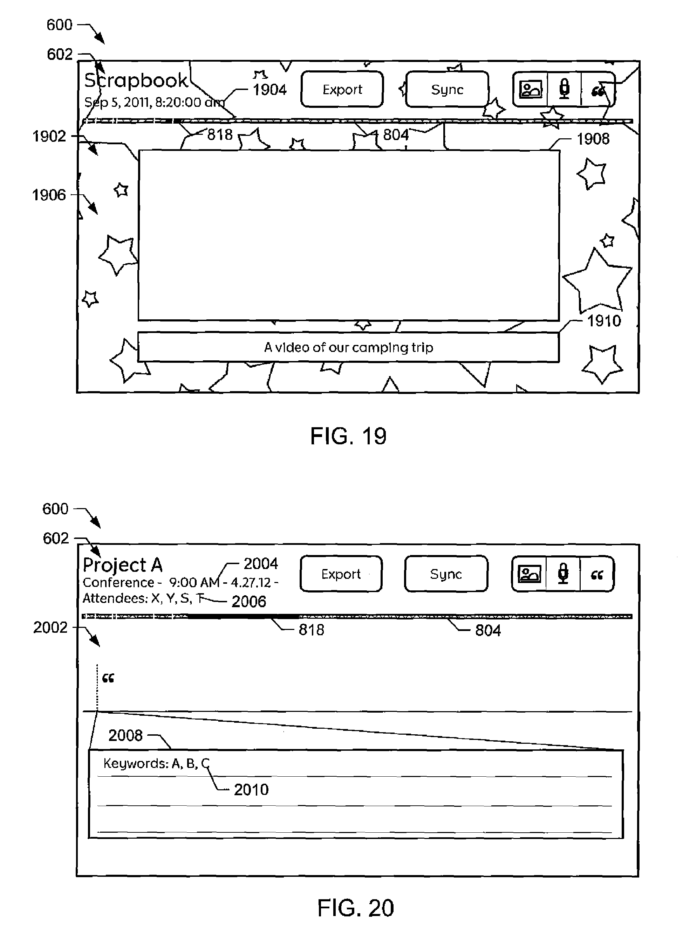

The example user interface 600 (e.g., the application 602, the timeline view 802) includes buttons that, when selected by a user, cause the application 602 to take an action. For example, the user interface 600 includes a text note button 838, an audio note button 840, an image/video note button 842, a sync button 844, and an export button 846. The example text note button 838 causes the application 602 to change to a text note interface, which is described in more detail below with reference to FIGS. 18 and 19. The example audio note button 840 causes the application 602 to change to an audio note interface, which is described in more detail below with reference to FIGS. 15-17. The example image note button 842 causes the application 602 to change to an image note interface, which is described in more detail below with reference to FIGS. 11-14. The example sync button 844 causes a synchronizer (e.g., the synchronizer 212 of FIG. 2) to initiate a synchronization process. The example export button 846 causes the form exporter 210 of FIG. 2 to initiate an export process. An example export file is described in more detail below with reference to FIG. 10.

FIG. 9 illustrates the example user interface 600 of FIG. 6 operating to view notes belonging to the data entry subject of FIG. 8 at a second time resolution. As illustrated in FIG. 9, the time resolution 820 represents a longer period of time than in FIG. 8. As a result, the time window line 824 represents more data entry forms than in FIG. 8.

To represent the higher number of data entry forms, the example application 602 groups multiple data entry forms. In the example of FIG. 9, grouping multiple data entry forms causes the grouped forms to appear on the time window line 824 as though they occurred at the same time and/or within the same time range. When grouped, previews or representations of the data entry forms (e.g., audio, text, and/or image icons, and/or image previews) are also grouped and/or displayed as though they belong to the same location on the time window line 824. The example application 602 may enable the user to select threshold(s) (e.g., threshold time resolution(s)) and/or time range(s) (e.g., upper and/or lower time windows) for grouping the data entry forms.

The example user interface 600 of FIG. 9 includes four groups 902, 904, 906, 908. The first example group 902 represents the example data entry forms 806-812 of FIG. 8. Accordingly, the group 902 includes a quotation (e.g., text) icon 828, a microphone icon 830, and an image icon 832, as well as image previews 834. The example group 904 includes a video preview 910. The example group 906 includes a series 912 of image and/or video previews. The example series 912 may be used in situations in which the group of data entry forms includes a number of images too large to be displayed side-by-side as with the group 902. Additionally or alternatively, a single, representative or arbitrary image may be selected to represent the group 906.

FIG. 10 is a block diagram illustrating an example executable data entry form for exporting notes from the data entry application 602 of FIG. 6. The example data entry form 1000 of FIG. 10 includes markup 1002, scripting 1004, and content 1006.

The example markup 1002 includes application markup 1008 and content markup 1010. The application markup 1008, the content markup 1010 and, more generally, the markup 1002 are implemented using an organizational language, such as HTML5 and/or XHMTL, that provides a structure to the example executable data entry form 1000. For example, the application markup 1008 provides visual components, such as file menus, for the data entry application 602. The example content markup 1010 provides structure to the data included in the content 1006 (e.g., character and/or line spacing, fonts, etc.).

In some examples, the markup 1002 is a standards-based markup language that is widely supported and, thus, is readable on many different types of devices. The markup 1002 may be used to defme, for example, a visual layout, a font, a background, and/or a codec used by the data entry form 1000, and/or any other type of feature of an electronic document that may be implemented by a markup language.

The example scripting 1004 is a scripting language, such as Javascript, that defines behaviors of the example form 1000. The example scripting 1004 includes application scripting 1012 and content scripting 1014. For example, the content scripting 1014 may define inputs into the form 1000 and/or outputs from the form 1000 when the form 1000 is executed (e.g., by a processing device), and/or may define other behaviors by the application 602 to load content (e.g., from the data entry form storage 224, from an external device, etc.). The application scripting 1012 may define code to handle inputs (e.g., to result in outputs, to store and/or retrieve data from the content 1006, to manipulate display of data entry forms, etc.), to generate (e.g., replicate) the data entry form 1000 and/or the application 602, and/or any other behavior or feature of the application 602.

The example content 1006 may include text, audio, images, video, metadata, and/or any other type of user-defined and/or contextual information. The content 1006 may be added, deleted, modified, and/or otherwise manipulated by execution of the markup 1002 and/or the scripting 1004. In some examples, the content 1006 is implemented as a sequence of data that may be organized based on the content markup 1010. The content markup 1010 and/or the content scripting 1014 may be transferred in association with the content 1006 to maintain and/or improve the processing and/or display of content 1006 between different devices.

In some examples, the executable data entry form 1000 and/or the data entry application 602 may be replicated to produce additional data entry forms to provide the data entry application to additional devices. The replication may be performed by, for example, copying the markup 1002 and/or the scripting 1004 and discarding the content 1006. Thus, the content 1006 may be replaced while retaining the look and feel of the executable data entry form 1000. The example data entry form 1000 may be advantageously used to provide one or more data entry forms from a first device to one or more other devices. The receiving devices may be permitted by the first device to view the form 1000 (e.g., including the content 1006) and/or to replicate the form and/or the application for generating similar data entry forms having different content. In some examples, later synchronizations between the devices may result in the executable data entry form 1000 being easily associated with data entry forms replicated from the form 1000.

In some examples, the data entry form 1000 may be used to execute the application scripting 1012 and the application markup 1008 to generate data entry forms and populate the data entry forms with data (e.g., create new notes). In some other examples, the data entry form 1000 may be used to execute the application scripting 1012 and the application markup 1008 to load the content 1006 and display the content 1006 based on the content markup 1010 and/or the content scripting 1014. In some examples, the data entry form 1000 may be used to execute the application scripting 1012 and the application markup 1008 to send the data entry form 1000 and/or the application 602 to a different device. If the receiving device (e.g., the devices 200a-200c of FIG. 3) was previously provided with the application markup 1008 and/or the application scripting 1012, the receiving device may disregard the application markup 1008 and/or the application scripting 1012 or the application markup 1008 and/or the application scripting 1012 may be omitted from the transmission of the data entry form 1000. If the receiving device (e.g., the computer 304 of FIG. 3) has not been provided with an application to view the data entry forms, the receiving device may use the application markup 1008 and/or the application scripting 1012 to enable display, generation, and/or replication of the example data entry form 1000.

The example data entry form 1000 is not static and separate from the example application 602 of FIG. 6. Instead, the data entry form 1000 may include new markup and/or new scripting capabilities as the application 602 is provided with new features. Newer (e.g., updated) versions of the application 602 are able to read (e.g., display, replicate, etc.) old notes, as the markup 1002 and/or the scripting 1004 are generated using commonly-used languages.

FIG. 11 illustrates the example user interface 600 of FIG. 6 in response to a selection of the image note button 842. The example image note button 842 is highlighted 1102 in response to a selection (e.g., a touch on the touch-sensitive overlay 114 of FIG. 1). The application 602 then switches from the timeline view 802 to an image-taking view, as described below. To illustrate the generation of an image note, the example timeline 804 and the example time window 818 of FIG. 11 are representative of the entire time range of the project.

FIG. 12 illustrates the example user interface 600 of FIG. 6 presenting an image/video note interface 1202 in response to selection of the image note button 842. When the image/video note interface 1202 is displayed, the example device (e.g., the device 200 of FIG. 2) enables the image sensor (e.g., a photo and/or video camera, the image sensor 154 of FIGS. 1 and 2) and begins reading data received via the image sensor 154. The example image/video note interface 1202 of FIG. 12 includes an image display 1204 to display the image data received from the image sensor 154. The example image/video note interface 1202 includes the text note button 838, the audio note button 840, and the image note button 842 to enable the user to change between data entry interfaces (e.g., the image/video note interface 1202, an audio note interface, a text note interface, etc.) to enter multiple types of data into the same data entry form.

The example image/video note interface 1202 of FIG. 12 provides controls to enable the user to capture images and/or video received via the image sensor 154. In particular, the example interface 1202 includes a photo button 1206, a video button 1208, and a text annotation button 1210. The example image button 1206, when selected by the user, captures a frame of image information (e.g., a photo).

[0100] In some examples, the image/video note interface 1202 enables the user to capture multiple photos in succession (e.g., by repeatedly pressing the photo button 1206). Each time the user selects the photo button 1206, the device 200 (e.g., via the data entry form manager 202) stores an image received via the image sensor 154. The example data entry form manager 202 further associates the stored image(s) with the data entry form.

[0101] The example video button 1208, when selected by the user, causes the example data entry form manager 202 to begin collecting video data from the image sensor 154, the microphone 132, the audio buffer 214, and/or the video buffer 218. For example, the video button 1208 may cause the data entry manager 202 to capture live video and/or audio. In some other examples, the video button 1208 may enable the user to capture video and/or audio from the buffers 214, 218 for a predetermined amount of time prior to the time the video button 1208 is selected (e.g., the last 30 seconds, the last 60 seconds, etc.). When capturing video, the user may select the video button 1208 again to stop the video.

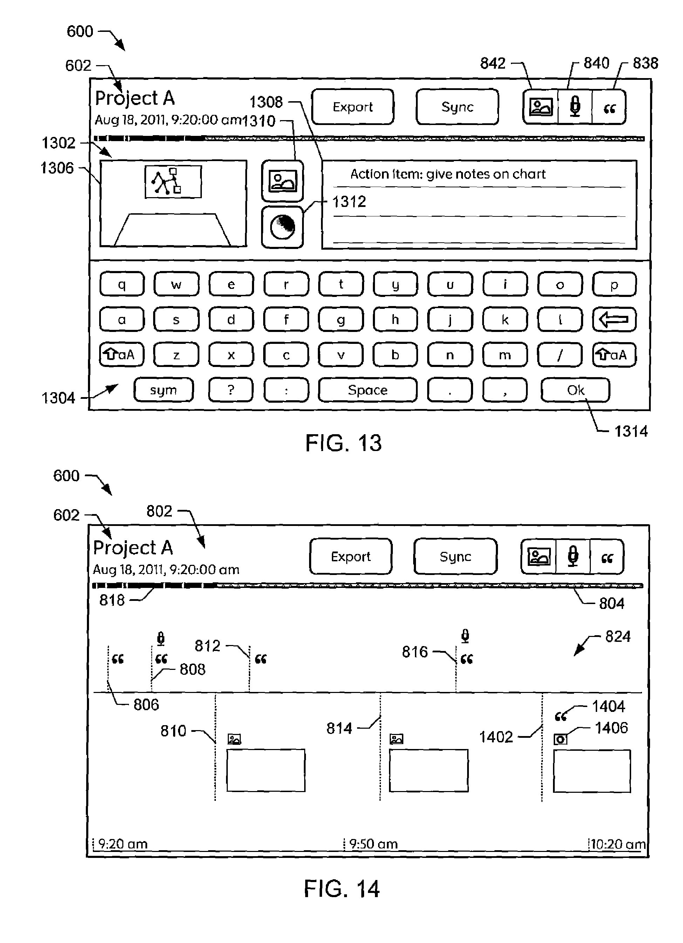

[0102] When the user has ended image and/or video capture, and/or when the user selects the text button 1208, the example user interface 600 changes to an annotation interface to permit the user to annotate (e.g., caption) the captured images and/or videos. An example annotation interface is described below with reference to FIG. 13. In some examples, the data entry manager 202 may use voice or facial recognition to identify a subject of the image and/or video and automatically annotate the image(s) and/or video(s).

[0103] When the user has completed entering data or content into the form, the user may select a Done button 1212 to cause the data entry manager 202 to store the data entry form and data entered into the form via the user interface 600.

FIG. 13 illustrates the example user interface 600 of FIG. 6 presenting an annotation interface 1302 including a virtual keyboard 1304 for annotating an image/video note. In some examples, the virtual keyboard 1304 interacts with a predictive text engine to facilitate the rapid entry of text by a user. The example annotation interface 1302 displays at least one photo or video image 1306 to be annotated and a text entry field 1308 into which the user may type text via the keyboard 1304. Other methods of text entry may additionally or alternatively be used to enter text into the text entry field 1308 or otherwise annotate the image 1306.

The example annotation interface 1302 further includes an image button 1310 and a video button 1312 to enable the user to take additional photos and/or videos from the annotation interface 1302. When the user has completed annotating, the user may select an "Ok" or other button 1314 to finish annotation. After finishing annotation, the example annotation interface 1302 may return to the timeline view 802 (e.g., if the image/video note and/or the text are stored as a data entry form) or to the image/video note interface 1202 (e.g., if additional data is to be entered into the data entry form).

FIG. 14 illustrates the example user interface 600 of FIG. 6 presenting a data entry form representation 1402 of a video note. In the example of FIG. 14, the data entry form manager 202 has placed the data entry form representation 1402 on the time window line 824 of the example timeline view 802. The location of the example data entry form representation 1402 is selected based on the time at which the data entry form associated with the representation 1402 was generated (e.g., instantiated, modified, and/or stored). The example data entry form representation 1402 is associated with a quotation icon 1404 (e.g., to represent text or annotation data in the data entry form) and a video icon 1406 (e.g., to represent video data in the data entry form).

FIG. 15 illustrates the example user interface 600 of FIG. 6 in response to a selection of the audio note button 840. The example audio note button 842 is highlighted 1502 in response to a selection (e.g., a touch on the touch-sensitive overlay 114 of FIG. 1). The application 602 then switches from the timeline view 802 to an audio-capturing view, as described below. To illustrate the generation of an audio note, the example timeline 804 and the example time window 818 of FIG. 15 are representative of the entire time range of the project.

FIG. 16 illustrates the example user interface 600 of FIG. 6 presenting an audio note interface 1602 in response to selection of the audio note button 840. The example audio note interface 1602 displays a virtual keyboard 1604, an audio level indicator 1606, and a text entry field 1608. When the audio note button 840 is selected (e.g., as in FIG. 15), the example data entry form manager 202 of FIG. 2 begins receiving audio from the microphone 132 and/or from the audio buffer 214. In some examples, the data entry form manager 202 may begin receiving text via the speech-to-text converter 216 in response to selection of the audio note button 840. The data entry form manager 202 displays a representation of the volume of received audio in the level indicator 1606 to confirm to the user that sound is being received.

The user may use the virtual keyboard 1604 (e.g., via the touch-sensitive overlay 114 of FIGS. 1 and 2) to enter text into the text entry field 1608. When the user has entered text and/or otherwise annotated the audio note (if at all), the user may select one of two audio buffer buttons 1610, 1612. The first audio buffer button 1610 causes the data entry form manager 202 to store the most recent 30 seconds of stored audio from the audio buffer 214 to the data entry form. Similarly, the second audio buffer button 1612 causes the data entry form manager 202 to store the most recent 60 seconds of stored audio from the audio buffer 214 to the data entry form. Additional and/or alternative periods of audio may be used.

In some examples, in response to the user selection of an audio buffer button 1610, 1612, the data entry form manager 202 stores the corresponding length of buffered audio and any annotations (e.g., text entered into the text entry field 1608) into the data entry form. The example data entry form manager 202 then empties the text entry field 1608 to enable the user to enter a note for another length of audio. In this manner, the user may annotate and save audio clips substantially continuously.

When the user is finished entering audio clips, the user may select an "Ok" button 1614 or other button to return to the timeline view 802. The example audio note interface 1602 includes the text note button 838, the audio note button 840, and the image note button 842 to enable the user to change between data entry interfaces (e.g., the image/video note interface 1202, the audio note interface 1602, a text note interface, etc.) to enter multiple types of data into the same data entry form. In some examples, text entered into the text entry field 1608 may be copied to corresponding text entry fields in other interfaces if the text note button 838 or the image note button 842 is selected prior to storing an audio note.

In some examples, the data entry form manager 202 automatically saves a length of audio from the audio buffer 214 when the user begins entering text (or freehand drawing) into the text entry field 1608. In this manner, the user may more quickly enter information without having to select the length of audio.

The use of the buffer(s) 214, 218 enhances the ability of a user to discern data (e.g., the content of the data, the context of the data). For example, if a user's written notes are not legible or are very terse, the user (or a different user) could return to an audio recording to improve or complete the notes at a later date because the context of the discussion may be preserved in the audio. Use of the buffer(s) 214, 218 preserves the context of the data while balancing device storage limitations (e.g., saving only selected audio clips instead of a full duration of a meeting or session) and preserving the privacy of individuals (e.g., by permanently keeping only the most relevant portions of audio instead of a longer session or duration).

FIG. 17 illustrates the example user interface 600 of FIG. 6 in response to a selection of the text note button 838. The example text note button 838 is highlighted 1702 in response to a selection (e.g., a touch on the touch-sensitive overlay 114 of FIG. 1). The application 602 then switches from the timeline view 802 to an image-taking view, as described below. To illustrate the generation of an image note, the example timeline 804 and the example time window 818 of FIG. 11 are representative of the entire time range of the project.

FIG. 18 illustrates the example user interface 600 of FIG. 6 presenting a text note interface 1802 for entering data into a text note in response to selection of the text note button 838. The example text note interface 1802 of FIG. 18 includes a virtual keyboard 1804 that may be used by a user to enter data (e.g., text) into a text entry field 1806. The example text note interface 1802 further includes a Save Note button 1808. In response to a selection of the Save Note button, the example data entry form manager 202 of FIG. 2 stores text data stored in the text entry field 1806 as a data entry form.

When the user is finished entering text notes, the user may select an "Ok" button 1810 or other button to return to the timeline view 802. The example text note interface 1802 includes the text note button 838, the audio note button 840, and the image note button 842 to enable the user to change between data entry interfaces (e.g., the image/video note interface 1202, the audio note interface 1602, the text note interface 1802, etc.) to enter multiple types of data into the same data entry form. In some examples, text entered into the text entry field 1806 may be copied to corresponding text entry fields in other interfaces if the audio note button 840 or the image note button 842 is selected prior to storing a text note.

FIG. 19 illustrates the user interface 600 of FIG. 6 displaying an example note 1902 generated based on a note template in the example application 602. FIG. 20 illustrates the user interface 600 displaying another example note 2002 generated by another example note template. The example note 1902 may be displayed in response to a selection of a note in a timeline view (e.g., the timeline view 802 of FIG. 8). The time window 818 illustrates the location of the note 1902 in the timeline 804 of a series of related notes (e.g., in a project, etc.).

At least a portion of the note 1902 is generated by the example form instantiator 206 of FIG. 2 based on contextual information available at a time the user initialized the application 602 and/or at a time the user selected to generate a new note (e.g., by selecting the New Note button 606 of FIG. 6). For example, the form instantiator 206 may have instantiated the note 1902 based on a template, where the template included a timestamp 1904 of the note and a default note background image 1906.

To select a template or subject matter corresponding to the note 1902, the example form instantiator 206 determines that the contextual information, when multiplied by respective weights, has at least a threshold score for the selected template and/or has the highest score for the selected template compared to other templates.

The example note 1902 of FIG. 19 includes the timestamp 1904, the background image 1906, a video 1908, and text information 1910 (e.g., a caption for the video). In some examples, the video 1908 may be selected by the user (e.g., via the touch-sensitive overlay 114 of FIGS. 1 and 2) to cause the application 602 to play the video or to call another application to play the video. The example note 2002 of FIG. 20 includes a timestamp 2004, conference information 2006, and text information 2008. The text information includes keywords 2010, which may be used to index the note 2002 and/or to enable the user to more easily find the note via subsequent searching of notes (e.g., keyword searches). In some examples, the conference information 2006 (e.g., attendee names) and/or the keywords 2010 are automatically entered into the note 2002 by the form instantiator 206 based on contextual information.

The example text information 1910 and/or the text information 2008 may also be selected to permit the user to edit the text information 1910, 2008. In such examples, the data entry form manager 202 enters the text note interface 1802 and displays the example keyboard 1804 to enable the user to add, delete, and/or modify the text information 1910, 2008.

While the example annotation interface 1302, the example audio interface 1602, and the example text interface 1802 include virtual keyboards 1304, 1604, 1804 for entering text into text entry fields 1308, 1608, 1806, the example interfaces 1302, 1602, 1802 additionally or alternatively enable the use of freehand writing in the text entry fields 1308, 1608, 1806. For example, the user may draw or write in the text entry fields 1308, 1608, 1806 via the touch-sensitive overlay 114. A representation (e.g., an image) of the freehand drawing and/or writing created by the user is shown in the text entry field 1308, 1608, 1806. When the data entry form is stored (e.g., by the data entry form manager 202), the example drawing and/or writing input by the user is stored in the data entry form (e.g., as content). In some examples, the data entry form manager 202 converts writing into text (e.g., performs handwriting recognition), which is stored in the data entry form (e.g., in the text entry field 1308, 1608, 1806)

While an example manner of implementing the mobile device 100 has been illustrated in FIG. 1, one or more of the elements, processes and/or devices illustrated in FIG. 2 may be combined, divided, re-arranged, omitted, eliminated and/or implemented in any other way. Further, the example data entry form manager 202, the example context determiner 204, the example form instantiator 206, the example form reader 208, the example form exporter 210, the example synchronizer 212, the example audio buffer 214, the example speech-to-text converter 216, the example video buffer 218, the example user data cache 220, the example data entry form templates 222, the example data entry form storage 224 and/or, more generally, the example device 200 of FIG. 2 may be implemented by hardware, software, firmware and/or any combination of hardware, software and/or firmware. Thus, for example, any of the example data entry form manager 202, the example context determiner 204, the example form instantiator 206, the example form reader 208, the example form exporter 210, the example synchronizer 212, the example audio buffer 214, the example speech-to-text converter 216, the example video buffer 218, the example user data cache 220, the example data entry form templates 222, the example data entry form storage 224 and/or, more generally, the example device 200 of FIG. 2 could be implemented by one or more circuit(s), logic circuit(s), programmable processor(s), application specific integrated circuit(s) (ASIC(s)), programmable logic device(s) (PLD(s)) and/or field programmable logic device(s) (FPLD(s)), etc. When any of the appended apparatus or system claims are read to cover a purely software and/or firmware implementation, at least one of the example data entry form manager 202, the example context determiner 204, the example form instantiator 206, the example form reader 208, the example form exporter 210, the example synchronizer 212, the example audio buffer 214, the example speech-to-text converter 216, the example video buffer 218, the example user data cache 220, the example data entry form templates 222, and/or the example data entry form storage 224 are hereby expressly defined to include a tangible computer readable medium such as a memory, DVD, CD, etc. storing the software and/or firmware. Further still, the example device 200 of FIG. 2 may include one or more elements, processes and/or devices in addition to, or instead of, those illustrated in FIG. 2, and/or may include more than one of any or all of the illustrated elements, processes and devices.

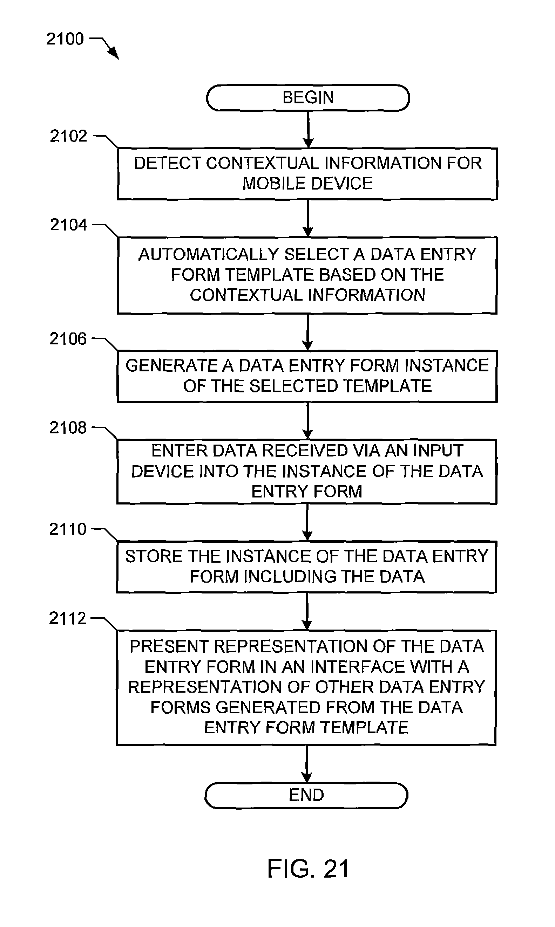

Flowcharts representative of example machine readable instructions for implementing the mobile device 100 of FIG. 1 are shown in FIGS. 21-26. In these examples, the machine readable instructions comprise program(s) for execution by a processor such as the processor 102 shown in the example mobile device 100 discussed above in connection with FIG. 1. The program may be embodied in software stored on a tangible computer readable medium such as the RAM 108 and/or the memory 110 associated with the processor 102, but the entire program and/or parts thereof could alternatively be executed by a device other than the processor 102 and/or embodied in firmware or dedicated hardware. Further, although the example program(s) are described with reference to the flowcharts illustrated in FIGS. 21-26, many other methods of implementing mobile device 100 may alternatively be used. For example, the order of execution of the blocks may be changed, and/or some of the blocks described may be changed, eliminated, or combined.

As mentioned above, the example processes of FIGS. 21-26 may be implemented using coded instructions (e.g., computer readable instructions) stored on a tangible computer readable medium such as a hard disk drive, a flash memory, a read-only memory (ROM), a cache, a RAM and/or any other storage media in which information is stored for any duration (e.g., for extended time periods, permanently, brief instances, for temporarily buffering, and/or for caching of the information). As used herein, the term tangible computer readable medium is expressly defined to include any type of computer readable storage and to exclude propagating signals. Additionally or alternatively, the example processes of FIGS. 21-26 may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium and to exclude propagating signals.

FIG. 21 is a flowchart representative of an example method 2100 to record data. The example method 2100 may be used to implement the example device 200 of FIG. 2. The example method 2100 detects (e.g., via the example context determiner 204 of FIG. 2) contextual information for a mobile device (e.g., the example mobile device 100 of FIG. 1, the example device 200) (block 2102). Based on the contextual information, the example form instantiator 206 of FIG. 2 automatically selects a data entry form template based on the contextual information (block 2104). The example data form entry manager 202 of FIG. 2 generates a data entry form instance of the selected template (block 2106). The example data entry form manager 202 enters data received via an input device into the instance of the data entry form (block 2108). The example data form entry manager 202 stores the instance of the data entry form including the data (e.g., in the data entry form storage 224 of FIG. 2) (block 2110). The example data form entry manager 202 presents a representation of the data entry form in an interface with a representation of other data entry forms generated from the data entry form template (block 2112). The example method 2100 then ends.

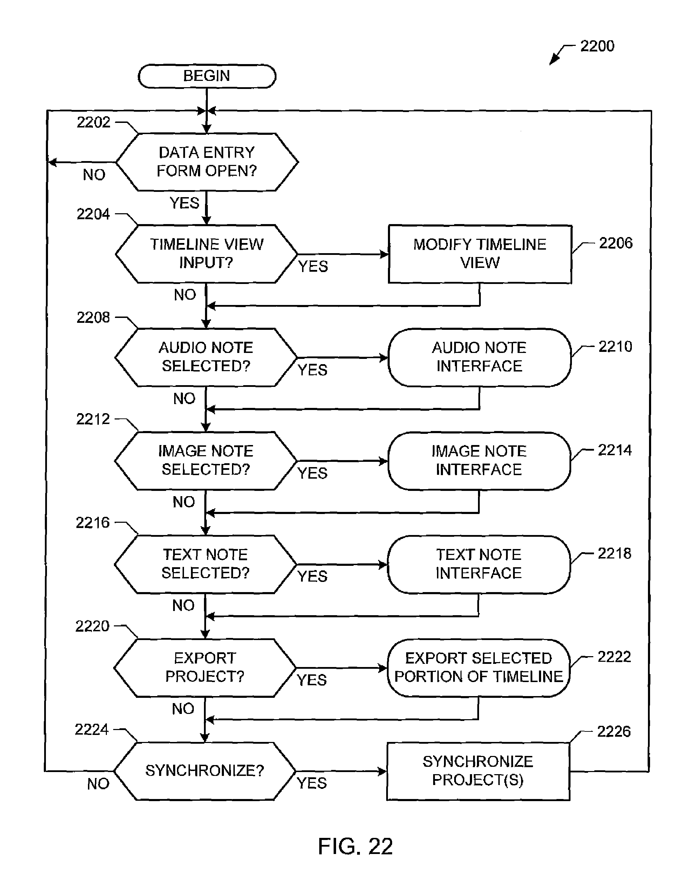

FIG. 22 is a flowchart representative of an example method 2200 to record data in a data entry form. The example method 2200 may be used to implement the example data entry form manager 202 of FIG. 2.

The example data entry form manager 202 determines whether a data entry form is open (block 2202). For example, the data entry form manager 202 may determine whether the form instantiator 206 has instantiated a data entry form. If a data entry form is not open (block 2202), block 2202 iterates until a data entry form is open. When a data entry form is open (block 2202), the example data entry form manager 202 determines whether an input timeline view (e.g., the timeline view 802) has been received (block 2204). If a timeline view input has been received (block 2204), the example data entry form manager 202 modifies the timeline view 802 based on the input (block 2206). For example, the data entry form manager 202 may increase or decrease the temporal resolution of the timeline view 802 in response to a pinch gesture, translate (e.g., move) the window range in response to a swipe gesture, and/or otherwise modify the timeline view.

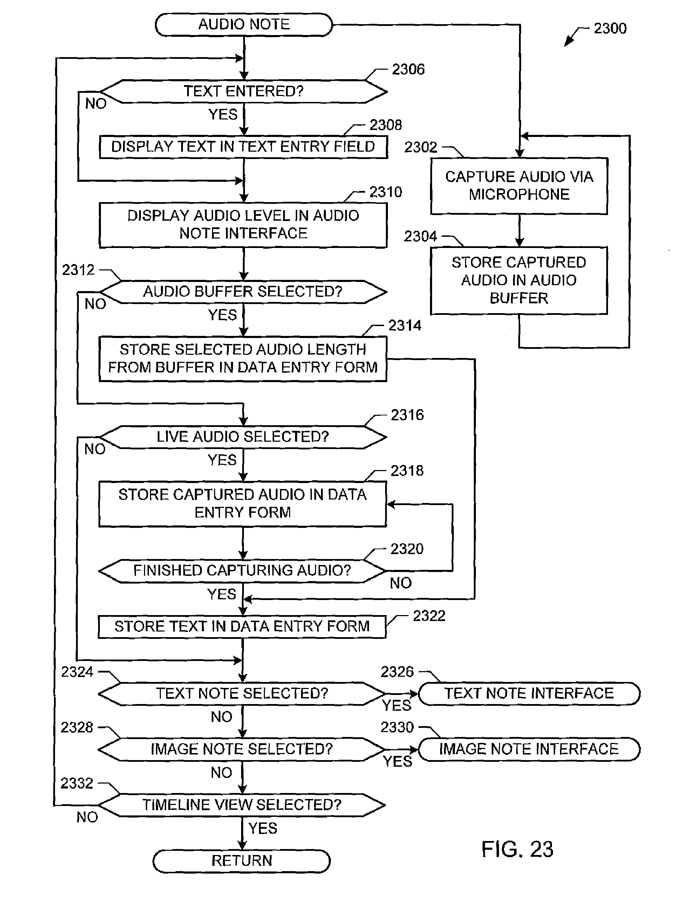

After modifying the timeline view (block 2206) or if there is no timeline view input (block 2204), the example data entry form manager 202 determines whether an audio note has been selected (e.g., via the audio note button 840, by selecting an existing audio note, etc.) (block 2208). If an audio note has been selected (block 2208), the example data entry form manager 202 displays (e.g., changes to) an audio note interface (e.g., the audio note interface 1602 of FIG. 16) (block 2210). An example method to implement the audio note interface 1602 is described below with reference to FIG. 23.

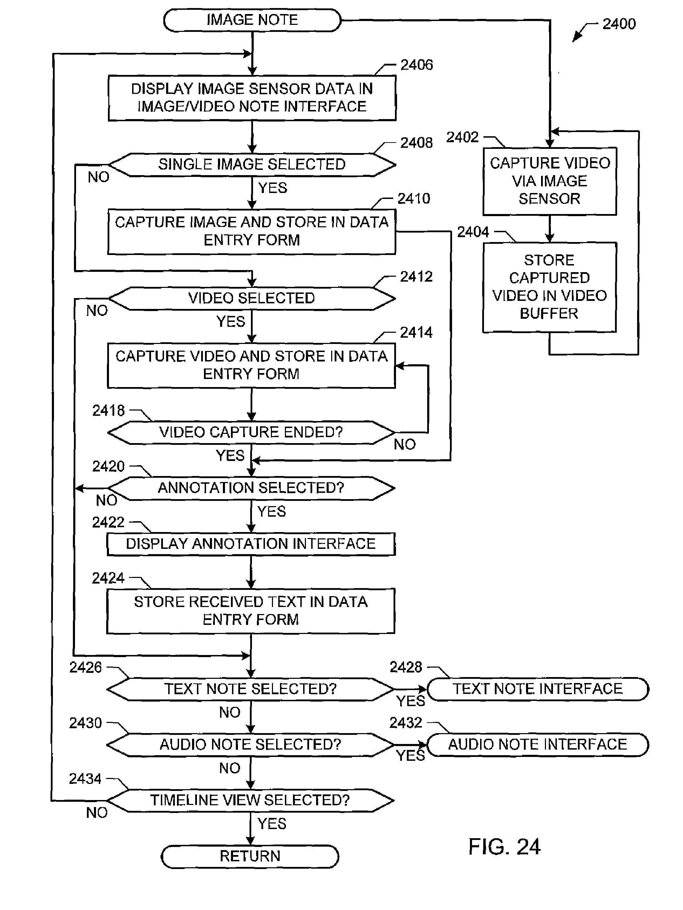

After returning from the audio note interface 1602 (block 2210) or if the audio note was not selected (block 2208), the example data entry form manager 202 of FIG. 2 determines whether an image (and/or video) note has been selected (e.g., via the image/video note button 842, by selecting an existing image/video note, etc.) (block 2212). If an image note has been selected (block 2212), the example data entry form manager 202 displays (e.g., changes to) an image/video note interface (e.g., the image/video note interface 1202 of FIG. 12) (block 2214). An example method to implement the image/video note interface 1202 is described below with reference to FIG. 24.

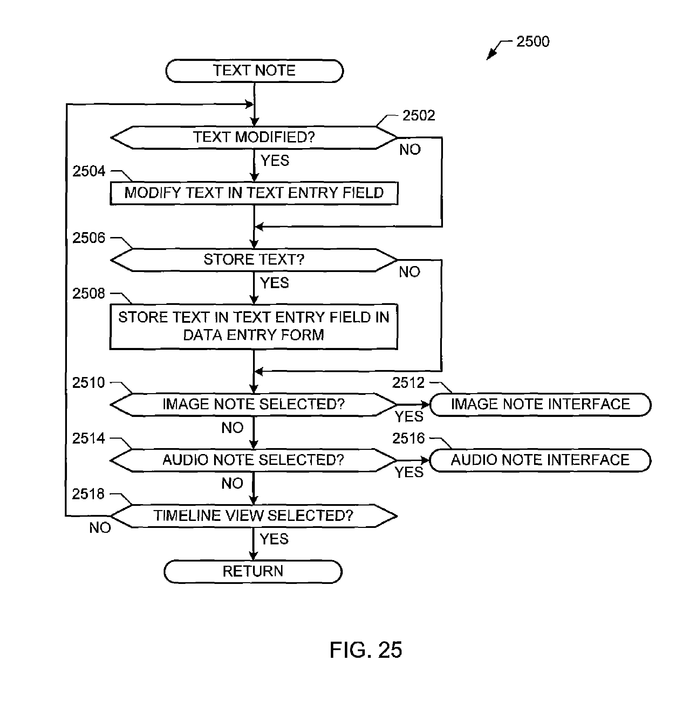

After returning from the image/video note interface 1202 (block 2214) or if the image note was not selected (block 2212), the example data entry form manager 202 of FIG. 2 determines whether a text note has been selected (e.g., via the text note button 838, by selecting an existing text note, etc.) (block 2216). If a text note has been selected (block 2216), the example data entry form manager 202 displays (e.g., changes to) a text note interface (e.g., the text note interface 1802 of FIG. 18) (block 2218). An example method to implement the text note interface 1802 is described below with reference to FIG. 25.

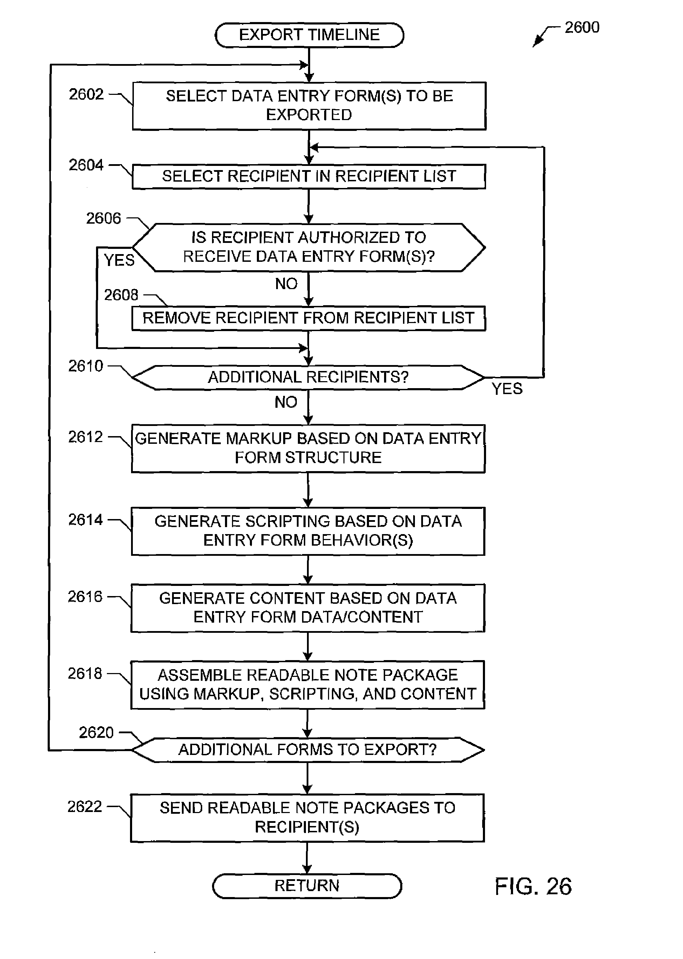

After returning from the text note interface 1802 (block 2218) or if the text note was not selected (block 2216), the example data entry form manager 202 of FIG. 2 determines whether to export a project (e.g., a project being viewed) (block 2220). For example, the data entry form manager 202 may determine that the project is to be exported when a user selects an Export button (e.g., the Export button 846 of FIG. 8). If a project is to be exported (block 2220), the example form exporter 210 of FIG. 2 exports a selected portion of the timeline (block 2222). In some other examples, the form exporter 210 exports an entire project (e.g., all data entry forms in a project). In some examples, the form exporter 210 prompts a user to select one or more data entry forms to be exported. An example method to export a selected portion of a timeline is described below with reference to FIG. 26.

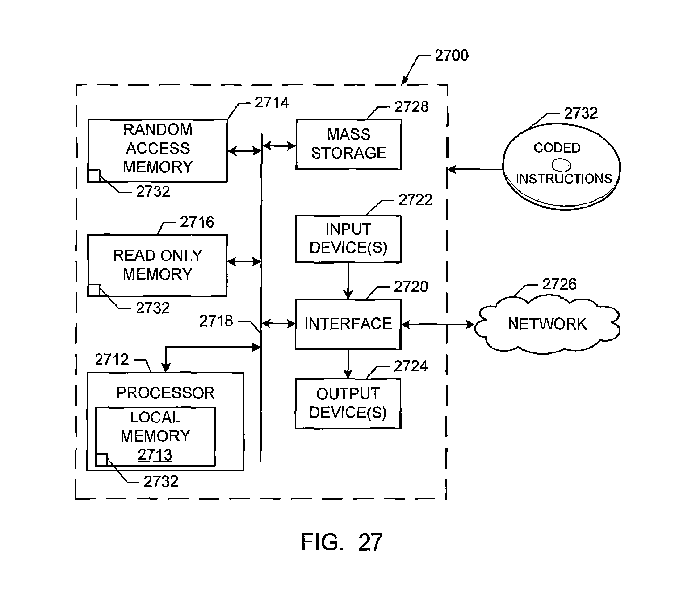

After exporting (block 2222) or if the data entry form manager 202 determines that exporting is not to be performed (block 2220), the example data entry form manager 202 determines whether to synchronize (block 2224). For example, the data entry form manager 202 may determine that one or more data entry forms and/or projects are to be synchronized in response to a user selecting a Synchronize button (e.g., the Synchronize button 844 of FIG. 8). If the data entry form manager 202 determines that synchronization is to occur (block 2224), the example synchronizer 212 of FIG. 2 synchronizes one or more projects and/or data entry forms (block 2226). For example, the synchronizer 212 may synchronize the device 200 with other devices (e.g., the devices 200a-200c of FIG. 3, servers 302, computers 304, and any other types of devices). An example method to synchronize is described below with reference to FIG. 27.

After synchronizing (block 2226) and/or if synchronizing is to not occur (block 2224), control returns to block 2202 to determine whether a data entry form is open. The example method 2200 of FIG. 22 may iterate to continuously provide a user interface (e.g., the user interface 600 of FIGS. 6-20) to enable a user to view, add, delete, modify, export, and/or synchronize data entry forms.

FIG. 23 is a flowchart representative of an example method 2300 to implement an audio note interface (e.g., the audio note interface 1602 of FIG. 16). The example method 2300 may be performed by the device 200 of FIG. 2 to implement block 2210 of FIG. 22.

The example method 2300 may begin when the data entry form manager 202 determines that the audio note button 840 has been selected. The example method 2300 includes capturing audio via a microphone (e.g., the microphone 132 of FIGS. 1 and 2) (block 2302). An audio buffer 214 stores the captured audio (block 2304). In the example of FIG. 23, blocks 2302 and 2304 iterate for the duration of the operation of the example application (e.g., the application 602). Thus, blocks 2302 and 2304 enable a user to store audio even when the user had not previously commanded the device 200 to store audio (e.g., to capture an audio clip the user wants to capture but that the user had not actively recorded).

When the example audio note interface 1602 is opened, the example data entry form manager 202 determines whether text has been entered (e.g., via the virtual keyboard 1604 and the touch-sensitive overlay 114) (block 2306). If the data entry form manager 202 determines that text has been entered (block 2306), the example data entry form manager 202 displays the text (e.g., via the example audio note interface 1602) in a text entry field (e.g., the text entry field 1608) (block 2308). In some examples, the data entry form manager 202 displays modified text and/or removes text in response to user interaction with the virtual keyboard (e.g., deleting characters in response to presses of a backspace button, etc.).

The example data entry form manager 202 displays an audio level in the audio note interface 1602 (block 2310). For example, the data entry form manager 202 may determine a level of the audio being recorded via the microphone 132 and display a level indicator such as the level indicator 1606 of FIG. 16 representative of the determined level.

The example data entry form manager 202 determines whether the audio buffer 214 has been selected for a source of audio date (block 2312). For example, the data entry form manager 202 may determine whether an audio buffer button (e.g., the audio buffer buttons 1610, 1612 of FIG. 16) have been selected by the user. If the audio buffer has been selected (block 2312), the example data entry form manager 202 stores a selected length of audio from the audio buffer in the data entry form (block 2314). For example, if the 30 second buffer button 1610 is selected, the example data entry form manager 202 retrieves the most recent 30 seconds of audio from the buffer and stores the audio in the data entry form. In some examples, the data entry form manager 202 adds metadata, contextual information, and/or other information for the data entry form based on the audio.

If the audio buffer is not selected (block 2312), the example data entry form manager 202 determines whether live audio has been selected (block 2316). For example, the data entry form manager 202 may determine that a user has selected to record audio (e.g., recording directly from the microphone 132, not from the buffer 214). If live audio has been selected (block 2316), the example data entry form manager 202 receives and stores captured audio in the data entry form (block 2318). In some examples, the data entry form manager 202 adds metadata, contextual information, and/or other information for the data entry form based on the audio. The example data entry form manager 202 determines whether the user has finished capturing audio (block 2320). For example, the user may select a button on the audio note interface 1602 to stop recording live audio. If the user has not finished capturing audio (block 2320), control returns to block 2318 to continue storing audio.

After storing the selected audio length from the buffer (block 2314) or finishing storing captured live audio (block 2320), the example data entry form manager 202 stores text (e.g., from the text entry field 1608) in the data entry form (block 2322). For example, the data entry form manager 202 may store any text present in the text entry field 1608 in the data entry form in association with the stored audio. In some examples, the data entry form manager 202 clears (e.g., empties) the text entry field 1608 to enable the user to enter another text and/or audio note.

After storing the text (block 2322), or if live audio has not been selected (block 2316), the example data entry form manager 202 determines whether a text note interface has been selected (e.g., via the text note button 838 of FIG. 16) (block 2324). If the text note interface has been selected (block 2324), the example data entry form manager 202 transitions to a text note interface (e.g., the text note interface 1802 of FIG. 18) (block 2326). An example method to implement the text note interface 1802 is described with reference to FIG. 25. In some examples, any text present in the text entry field 1608 is transferred to a corresponding text entry field in the text note interface 1802.

If the text note interface has not been selected (block 2324), the example data entry form manager 202 determines whether an image note interface has been selected (e.g., via the image note button 842 of FIG. 16) (block 2328). If the image note interface has been selected (block 2328), the example data entry form manager 202 transitions to an image/video note interface (e.g., the image/video note interface 1202 of FIG. 12) (block 2330). An example method to implement the image/video note interface 1202 is described with reference to FIG. 24. In some examples, any text present in the text entry field 1608 is transferred to a corresponding text entry field in the image/video note interface 1202. Blocks 2324-2330 enable a user to rapidly switch between different types of data entry.

If the image note interface has not been selected (block 2328), the example data entry form manager 202 determine whether the timeline view (e.g., the timeline view 802) has been selected (block 2332). If the timeline view 802 has not been selected (block 2332), control returns to block 2306 to continue entering text and/or audio into the data entry form. On the other hand, if the timeline view 802 is selected (block 2332), the example data entry form manager 202 returns control to the timeline view 802. For example, if the user presses a button (e.g., via the touch-sensitive overlay 114) indicating that the user is done entering audio notes, the example data entry form manager 202 changes to the timeline view 802. Control then returns to block 2212 of FIG. 22 to determine if an image note has been selected.

FIG. 24 is a flowchart representative of an example method 2400 to implement an image note interface (e.g., the image/video note interface 1202 of FIG. 12). The example method 2400 may be performed by the device 200 of FIG. 2 to implement block 2214 of FIG. 22.

The example method 2400 of FIG. 24 begins when the data entry form manager 202 determines that the image note button 842 has been selected. The example method 2400 includes capturing video via an image sensor (e.g., the image sensor 154 of FIGS. 1 and 2) (block 2402). A video buffer 218 stores the captured video (block 2404). In the example of FIG. 24, blocks 2402 and 2404 iterate for the duration of the operation of the example application (e.g., the application 602). Thus, blocks 2402 and 2404 enable a user to store video even when the user had not previously commanded the device 200 to store video (e.g., to capture a video clip the user wants to capture but that the user had not actively recorded).

When the example image/video note interface 1202 is opened, the example data entry form manager 202 displays image sensor 154 data in the image/video note interface 1202 (block 2406). For example, the data entry form manager 202 may output the image data being received at the image sensor 154 to the image display 1204 for viewing by the user.

The example data entry form manager 202 determines whether a single image has been selected (block 2408). For example, the data entry form manager 202 determines whether a user has selected a button (e.g., the photo button 1206 corresponding to capturing a single image (e.g., a photo). If a single image is selected (block 2408), the example data entry form manager 202 captures an image and stores the image in the data entry form (block 2410). If a single image is not selected (block 2408), the example data entry form manager 202 determines whether a video has been selected (block 2412). For example, the data entry form manager 202 determines whether a user has selected a button (e.g., the video button 1208) corresponding to capturing a single image (e.g., a photo).

If video is selected (block 2412), the example data entry form manager 202 captures video (e.g., from the image sensor 154 and/or from the video buffer 218) (block 2414). In some examples, the data entry form manager 202 also captures audio via the microphone 132 and stores the audio in conjunction with the video. The example data entry form manager 202 determines whether video capture has ended (block 2416). If video capture has not ended (block 2416), the data entry form manager 202 continues to capture video and store the video in the data entry form.

When the video capture ends (block 2416) or after an image has been captured (block 2410), the example data entry form manager 202 determines whether annotation has been selected (e.g., via the annotation button 1210 of FIG. 12) (block 2420). If annotation has been selected (block 2420), the example data entry form manager 202 displays the annotation interface 1302 (block 2422). The data entry form manager 202 stores text in the data entry form (block 2424). For example, the data entry form manager 202 may store text received via the annotation interface 1302 via the virtual keyboard 1304 of FIG. 13.

If annotation has not been selected (block 2420) or if video has not been selected (block 2412), the example data entry form manager 202 determines whether a text note interface has been selected (e.g., via the text note button 838 of FIG. 12) (block 2426). If the text note interface has been selected (block 2426), the example data entry form manager 202 transitions to a text note interface (e.g., the text note interface 1802 of FIG. 18) (block 2428). An example method to implement the text note interface 1802 is described with reference to FIG. 25. In some examples, any text present in the text entry field 1308 is transferred to a corresponding text entry field in the text note interface 1802.

If the text note interface has not been selected (block 2426), the example data entry form manager 202 determines whether an audio note interface has been selected (e.g., via the audio note button 840 of FIG. 16) (block 2430). If the audio note interface has been selected (block 2430), the example data entry form manager 202 transitions to an audio note interface (e.g., the audio note interface 1602 of FIG. 16) (block 2432). An example method to implement the audio note interface 1602 is described with reference to FIG. 23. In some examples, any text present in the text entry field 1308 is transferred to a corresponding text entry field in the audio note interface 1602. Blocks 2426-2432 enable a user to rapidly switch between different types of data entry.

If the audio note interface has not been selected (block 2430), the example data entry form manager 202 determine whether the timeline view (e.g., the timeline view 802) has been selected (block 2434). If the timeline view 802 has not been selected (block 2434), control returns to block 2406 to continue storing images and/or videos into the data entry form. On the other hand, if the timeline view 802 is selected (block 2434), the example data entry form manager 202 returns control to the timeline view 802. For example, if the user presses a button (e.g., via the touch-sensitive overlay 114) indicating that the user is done entering image/video notes, the example data entry form manager 202 changes to the timeline view 802. Control then returns to block 2214 of FIG. 22 to determine if a text note has been selected.

FIG. 25 is a flowchart representative of an example method 2500 to implement a text note interface (e.g., the text note interface 1802 of FIG. 18). The example method 2500 may be performed by the device 200 of FIG. 2 to implement block 2218 of FIG. 22.

The example data entry form manager 202 determines whether text has been modified (e.g., in the text entry field 1806 via the virtual keyboard 1804 of FIG. 18 and the touch-sensitive overlay 114 of FIGS. 1 and 2) (block 2502). For example, text may be added to the text entry field 1802 and/or deleted from the text entry field 1806. If the text has been modified (block 2502), the example data entry form manager 202 modifies the text (e.g., displays the modified text) in the text entry field 1806 (block 2504).

After modifying the text entry field (block 2504) or if the text is not modified (block 2502), the example data entry form manager 202 determines whether to store the text (block 2506). For example, if the user selects to store or finalize a text note by selecting a Save Note button (e.g., the Save Note button 1808 of FIG. 18), the example data entry form manager 202 stores the text from the text entry field 1806 in the data entry form (block 2508).

After storing the text (block 2508), or if the text is not to be stored (block 2506), the example data entry form manager 202 determines whether an image note interface has been selected (e.g., via the image note button 842 of FIG. 18) (block 2510). If the image note interface has been selected (block 2510), the example data entry form manager 202 transitions to an image/video note interface (e.g., the image/video note interface 1202 of FIG. 12) (block 2512). An example method to implement the image/video note interface 1202 is described with reference to FIG. 24. In some examples, any text present in the text entry field 1806 is transferred to a corresponding text entry field in the image/video note interface 1202.

If the image/video note interface 1202 has not been selected (block 2510), the example data entry form manager 202 determines whether an audio note interface has been selected (e.g., via the audio note button 840 of FIG. 18) (block 2514). If the audio note interface has been selected (block 2514), the example data entry form manager 202 transitions to an audio note interface (e.g., the audio note interface 1602 of FIG. 16) (block 2516). An example method to implement the audio note interface 1602 is described with reference to FIG. 23. In some examples, any text present in the text entry field 1806 is transferred to a corresponding text entry field in the audio note interface 1602. Blocks 2510-2514 enable a user to rapidly switch between different types of data entry.

If the audio note interface has not been selected (block 2514), the example data entry form manager 202 determine whether the timeline view (e.g., the timeline view 802) has been selected (block 2518). If the timeline view 802 has not been selected (block 2518), control returns to block 2502 to adding text notes into the data entry form. On the other hand, if the timeline view 802 is selected (block 2518), the example data entry form manager 202 returns control to the timeline view 802. For example, if the user presses a button (e.g., via the touch-sensitive overlay 114) indicating that the user is done entering image/video notes, the example data entry form manager 202 changes to the timeline view 802. Control then returns to block 2220 of FIG. 22 to whether to export notes and/or projects.

FIG. 26 is a flowchart representative of an example method 2600 to export a selected portion of a project. The example method 2600 may be performed by the device 200 of FIG. 2 to implement block 2222 of FIG. 22.

The example method 2600 begins by selecting (e.g., via the data entry form manager 202 of FIG. 2) the form(s) to be exported (block 2602). For example, the data entry form manager 202 may select the data entry form(s) based on a selection by user, based on a current time window, based on a timeline view, and/or using any other criteria.

One or more of the selected data entry forms may be associated with a recipient list. The example form exporter 210 of FIG. 2 selects a recipient in a recipient list (block 2604). The form exporter 210 determines whether the selected recipient(s) are authorized to receive the data entry form(s) to be exported (block 2606). If the recipient is not authorized (block 2606), the example form exporter 210 removes the selected recipient from the recipient list (e.g., for the selected data entry form) (block 2608). If the recipient is authorized (block 2606), or after the unauthorized recipient has been removed (block 2608), the example form exporter 210 determines whether there are additional recipients in the recipient list (e.g., to determine authorization) (block 2610). If there are additional recipients (block 2610), control returns to block 2604 to select another recipient.

If there are no additional recipients (block 2610), the example form exporter 210 generates markup (e.g., the markup 1002 of FIG. 10) based on a structure of the data entry form (block 2612). For example, the structure may include the placement of the buttons, information, objects, and/or any other structural item of the example data entry form. The example form exporter 210 generates scripting (e.g., the scripting 1004) based on behavior(s) of the data entry form (block 2614). For example, the form exporter 210 may generate the scripting 1004 to replicate the user selection of data entry forms from the timeline view, behaviors based on user interactions, button behaviors, and/or any other desired behaviors of the application 602 that may be replicated in the scripting 1004. The example form exporter 210 also generates content (e.g., the content 1006) based on data and/or content in the data entry form (block 2616). For example, the form exporter 210 may generate the content 1006 based on data and/or information (e.g., video, images, audio, text, metadata, etc.) entered into the data entry form by the user and/or by command of the user. The example form exporter 210 assembles a readable (e.g., executable) note package using the markup 1002, the scripting 1004, and the content 1006 (block 2618).

The form exporter 210 determines whether there are additional forms to export (block 2620). If there are additional forms (block 2620), control returns to block 2602 to select one or more data entry forms. If there are no additional forms to export (block 2620), the example form exporter sends the readable note package(s) to the recipient(s) (e.g., the recipients remaining in the recipient list(s) of the note package(s)) (block 2622). For example, the form exporter 210 may send the readable note package(s) to other devices (e.g., the devices 200a-200c of FIG. 3), computer systems (e.g., the computer 304 of FIG. 3), server systems (e.g., the server 302 of FIG. 3), and/or any other recipient. The example instructions 2600 end and control returns to block 2224 of FIG. 22.

FIG. 27 is a block diagram of an example processor platform 2700 capable of executing the instructions 2100-2600 of FIGS. 21-26 to implement the software device 200 of FIG. 2. The processor platform 2700 can be, for example, a server, a personal computer, or any other type of computing device.

The processor platform 2700 of the instant example includes a processor 2712. For example, the processor 2712 can be implemented by one or more microprocessors or controllers from any desired family or manufacturer.

The processor 2712 includes a local memory 2713 (e.g., a cache) and is in communication with a main memory including a volatile memory 2714 and a non-volatile memory 2716 via a bus 2718. The volatile memory 2714 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 2716 may be implemented by flash memory and/or any other desired type of memory device. Access to the main memory 2714, 2716 is controlled by a memory controller.

The processor platform 2700 also includes an interface circuit 2720. The interface circuit 2720 may be implemented by any type of interface standard, such as an Ethernet interface, a universal serial bus (USB), and/or a PCI express interface.

One or more input devices 2722 are connected to the interface circuit 2720. The input device(s) 2722 permit a user to enter data and commands into the processor 2712. The input device(s) can be implemented by, for example, a keyboard, a mouse, a touchscreen, a track-pad, a trackball, isopoint and/or a voice recognition system.

One or more output devices 2724 are also connected to the interface circuit 2720. The output devices 2724 can be implemented, for example, by display devices (e.g., a liquid crystal display, a cathode ray tube display (CRT), a printer and/or speakers). The interface circuit 2720, thus, typically includes a graphics driver card.

The interface circuit 2720 also includes a communication device such as a modem or network interface card to facilitate exchange of data with external computers via a network 2726 (e.g., an Ethernet connection, a digital subscriber line (DSL), a telephone line, coaxial cable, a cellular telephone system, etc.).

The processor platform 2700 also includes one or more mass storage devices 2728 for storing software and data. Examples of such mass storage devices 2728 include floppy disk drives, hard drive disks, compact disk drives and digital versatile disk (DVD) drives. The mass storage device 2728 may implement one or more of the user data cache 220 (e.g., to store contextual information), the data entry form template cache 222 (e.g., to store data entry form templates), and/or the data entry form storage 224 (e.g., to store data entry forms).

The coded instructions 2732 of FIGS. 21-27 may be stored in the mass storage device 2728, in the volatile memory 2714, in the non-volatile memory 2716, and/or on a removable storage medium such as a CD or DVD.

Although certain methods, apparatus, and articles of manufacture have been described herein, the scope of coverage of this patent is not limited thereto. To the contrary, this patent covers all methods, apparatus, and articles of manufacture falling within the scope of the claims.

## Claims

1. A method (2100) to record data, comprising:
detecting (2102) contextual information for a mobile device (100);
automatically selecting (2104) a data entry form template (502) from a plurality of data entry form templates (502, 504, 506) based on the contextual information;
generating (2106) a data entry form instance (1000) of the selected data entry form template (502);
entering (2108) data received via an input device (114, 116, 124, 126, 132, 154, 214, 216, 218) of the mobile device (100) into the instance of the data entry form (1000);
storing (2110) the instance of the data entry form (1000) including the data; and
presenting (2112) a representation (806-816, 828-834) of the instance of the data entry form (1000) in an interface (600) with a representation of at least one additional instance of a data entry form (1000) generated based on the data entry form template (502).

2. A method as defined in claim 1, wherein detecting (2102) the contextual information is in response to opening a note-taking application (602) on the mobile device (100).

3. A method as defined in claim 1, wherein selecting (2104) from the plurality of data entry templates (502, 504, 506) comprises selecting one of the plurality of data entry form templates (502, 504, 506) based on a similarity of the contextual information to second contextual information associated with the selected one of the plurality of data entry form templates (502, 504, 506).

4. A method as defined in claim 1, wherein the data received via the input device (114, 116, 124, 126, 132, 154, 214, 216, 218) comprises at least one of a plurality of inputs including audio received via an audio input device (132), video received via an image sensor (154), an image received via the image sensor (154), text received via a software keyboard (1304, 1604, 1804), text received via a physical keyboard, and text received via the audio input device (132) and processed to generate the text from the audio.

5. A method as defined in claim 4, further comprising entering first data received via a first one of the plurality of inputs in response to entering second data received via a second one of the plurality of inputs.

6. A method as defined in claim 5, further comprising retrieving the first data from a buffer (214), the first data comprising at least one of audio data or video data and representing a time period occurring immediately prior to a time the second data is entered or occurring immediately prior to a time the second data is received.

7. An apparatus, comprising:
a logic circuit (102); and
a memory (108, 110), storing instructions (148, 150) which, when executed by the logic circuit (102), cause the logic circuit (102) to:
detect (2102) contextual information for a mobile device (100);
automatically select (2104) a data entry form template (502) from a plurality of data entry form templates (502, 504, 506) based on the contextual information;
generate (2106) a data entry form instance (1000) of the selected data entry form template (502);
enter (2108) data received via an input device (114, 116, 124, 126, 132, 154, 214, 216, 218) of the mobile device (100) into the instance of the data entry form (1000);
store (2110) the instance of the data entry form (1000) including the data; and
present (2112) a representation (806-816, 828-834) of the instance of the data entry form (1000) in an interface (600) with a representation of at least one additional instance of a data entry form (1000) generated based on the data entry form template (502).

8. An apparatus as defined in claim 7, wherein detecting (2102) the contextual information is in response to opening a note-taking application (602) on the mobile device (100).

9. An apparatus as defmed in claim 7, wherein selecting (2104) from the plurality of data entry templates (502, 504, 506) comprises selecting one of the plurality of data entry form templates (502, 504, 506) based on a similarity of the contextual information to second contextual information associated with the selected one of the plurality of data entry form templates (502, 504, 506).

10. An apparatus as defined in claim 7, wherein the data received via the input device (114, 116, 124, 126, 132, 154, 214, 216, 218) comprises at least one of a plurality of inputs including audio received via an audio input device (132), video received via an image sensor (154), an image received via the image sensor (154), text received via a software keyboard (1304, 1604, 1804), text received via a physical keyboard, and text received via the audio input device (132) and processed to generate the text from the audio.

11. An apparatus as defined in claim 10, wherein the instructions (148, 150) are to further cause the logic circuit (102) to enter first data received via a first one of the plurality of inputs in response to entering second data received via a second one of the plurality of inputs.

12. An apparatus as defined in claim 11, wherein the instructions (148, 150) are to further cause the logic circuit (102) to retrieve the first data from a buffer (214, 218), the first data comprising at least one of audio data or video data and representing a time period occurring immediately prior to a time the second data is entered or occurring immediately prior to a time the second data is received.

13. An apparatus as defined in claim 10, wherein the instructions (148, 150) are to further cause the logic circuit to associate the data received via the input device (114, 116, 124, 126, 132, 154, 214, 216, 218) with a location on a first timeline (804) representative of a time the data is entered.

14. An apparatus as defined in claim 13, wherein the instructions (148, 150) are to further cause the logic circuit to display a collective timeline including the first timeline (804) and a second timeline (804) representative of a second data entry form (1000).

15. An apparatus as defined in claim 13, wherein the instructions (148, 150) are to further cause the logic circuit (102) to play back audio or video stored in the data entry form and associated with a selected location on the first timeline (804).
